(19) Europäisches Patentamt
European Patent Office
Office européen des brevets

(11) **EP 4 177 770 A1**

(12) **EUROPEAN PATENT APPLICATION**
published in accordance with Art. 153(4) EPC

(43) Date of publication:
**10.05.2023 Bulletin 2023/19**

(21) Application number: **20943388.7**

(22) Date of filing: **01.07.2020**

(51) International Patent Classification (IPC):
**G06F 16/54** (2019.01)     **G06F 16/55** (2019.01)

(52) Cooperative Patent Classification (CPC):
**G06F 16/54; G06F 16/55**

(86) International application number:
**PCT/JP2020/025793**

(87) International publication number:
**WO 2022/003854 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
- **KAWAI Ryo**
  **Tokyo 108-8001 (JP)**

- **YOSHIDA Noboru**
  **Tokyo 108-8001 (JP)**
- **PAN Yadong**
  **Tokyo 108-8001 (JP)**
- **NISHIMURA Shoji**
  **Tokyo 108-8001 (JP)**
- **LIU Jianquan**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **IMAGE PROCESSING DEVICE, IMAGE PROCESSING METHOD, AND PROGRAM**

(57) The present invention provides an image processing apparatus (100) including: an image acquisition unit (101) that acquires an image; a selection unit (109) that selects at least one person included in the image, based on a user input; a skeleton structure detection unit (102) that detects a two-dimensional skeleton structure of a person included in the image; a feature value computation unit (103) that computes a feature value of the detected two-dimensional skeleton structure; and a search unit (105) that searches, from analysis target images, for the analysis target image including a person in a state similar to a state of the selected person, based on a degree of similarity to a feature value of the two-dimensional skeleton structure.

FIG. 2

EP 4 177 770 A1

# Description

[Technical Field]

The present invention relates to an image processing apparatus, an image processing method, and a program.

[Background Art]

In recent years, in a surveillance system and the like, a technique for detecting and searching for a state such as a pose and behavior of a person from an image of a surveillance camera is used. For example, Patent Documents 1 and 2 have been known as related techniques. Patent Document 1 discloses a technique for searching for a similar pose of a person, based on a key joint of a head, a hand, a foot, and the like of the person included in a depth video. Patent Document 2 discloses a technique for searching for a similar image by using pose information such as a tilt provided to an image, which is not related to a pose of a person. Patent Document 3 discloses a technique for receiving an input that specifies a person desired to be searched on an image, and searching for an image including the specified person. Patent Document 4 discloses a technique for acquiring, from an image, pose information about a search target being formed of a plurality of feature points, and searching for an image including a pose similar to a pose determined in the pose information. Note that, in addition, Non-Patent Document 1 has been known as a technique related to a skeleton estimation of a person.

[Related Document]

[Patent Document]

[Patent Document 1] Japanese Patent Application Publication (Translation of PCT Application) No. 2014-522035
[Patent Document 2] Japanese Patent Application Publication No. 2006-260405
[Patent Document 3] Japanese Patent Application Publication No. 2020-13290
[Patent Document 4] Japanese Patent Application Publication No. 2019-91138

[Non-Patent Document]

[Non-Patent Document 1] Zhe Cao, Tomas Simon, Shih-En Wei, Yaser Sheikh, "Realtime Multi-Person 2D Pose Estimation using Part Affinity Fields", The IEEE Conference on Computer Vision and Pattern Recognition (CVPR), 2017, P. 7291-7299

[Disclosure of the Invention]

[Technical Problem]

Patent Documents 1 and 4 are techniques for searching for an image including a person in a predetermined state, but there is room for improvement in an input method of a search query. Patent Documents 2 and 3 are not techniques for searching for an image including a person in a predetermined state.
An object of the present invention is to achieve a user-friendly input means of a search query in a system for searching for an image including a person in a predetermined state.

[Solution to Problem]

The present invention provides an image processing apparatus including:

an image acquisition means for acquiring an image;
a selection means for selecting at least one person included in the image, based on a user input;
a skeleton structure detection means for detecting a two-dimensional skeleton structure of a person included in the image;
a feature value computation means for computing a feature value of the detected two-dimensional skeleton structure; and
a search means for searching, from analysis target images, for the analysis target image including a person in a state similar to a state of the selected person, based on a degree of similarity to a feature value of the two-dimensional skeleton structure.

Further, the present invention provides an image processing method including,
by a computer:

acquiring an image;
selecting at least one person included in the image, based on a user input;
detecting a two-dimensional skeleton structure of a person included in the image;
computing a feature value of the detected two-dimensional skeleton structure; and
searching, from analysis target images, for the analysis target image including a person in a state similar to a state of the selected person, based on a degree of similarity to a feature value of the two-dimensional skeleton structure.

Further, the present invention provides a program causing a computer to function as:

an image acquisition means for acquiring an image;
a selection means for selecting at least one person included in the image, based on a user input;

a skeleton structure detection means for detecting a two-dimensional skeleton structure of a person included in the image;

a feature value computation means for computing a feature value of the detected two-dimensional skeleton structure; and

a search means for searching, from analysis target images, for the analysis target image including a person in a state similar to a state of the selected person, based on a degree of similarity to a feature value of the two-dimensional skeleton structure.

[Advantageous Effects of Invention]

The present invention achieves a user-friendly input means of a search query in a system for searching for an image including a person in a predetermined state.

[Brief Description of the Drawings]

[Fig. 1] Fig. 1 is a configuration diagram illustrating an outline of an image processing apparatus according to an example embodiment.

[Fig. 2] Fig. 2 is a configuration diagram illustrating a configuration of an image processing apparatus according to an example embodiment 1.

[Fig. 3] Fig. 3 is a flowchart illustrating an image processing method according to the example embodiment 1.

[Fig. 4] Fig. 4 is a flowchart illustrating a classification method according to the example embodiment 1.

[Fig. 5] Fig. 5 is a flowchart illustrating a search method according to the example embodiment 1.

[Fig. 6] Fig. 6 is a diagram illustrating a detection example of skeleton structures according to the example embodiment 1.

[Fig. 7] Fig. 7 is a diagram illustrating a human model according to the example embodiment 1.

[Fig. 8] Fig. 8 is a diagram illustrating a detection example of the skeleton structure according to the example embodiment 1.

[Fig. 9] Fig. 9 is a diagram illustrating a detection example of the skeleton structure according to the example embodiment 1.

[Fig. 10] Fig. 10 is a diagram illustrating a detection example of the skeleton structure according to the example embodiment 1.

[Fig. 11] Fig. 11 is a graph illustrating a specific example of the classification method according to the example embodiment 1.

[Fig. 12] Fig. 12 is a diagram illustrating a display example of a classification result according to the example embodiment 1.

[Fig. 13] Fig. 13 is a diagram for describing the search method according to the example embodiment 1.

[Fig. 14] Fig. 14 is a diagram for describing the search method according to the example embodiment 1.

[Fig. 15] Fig. 15 is a diagram for describing the search method according to the example embodiment 1.

[Fig. 16] Fig. 16 is a diagram for describing the search method according to the example embodiment 1.

[Fig. 17] Fig. 17 is a diagram illustrating a display example of a search result according to the example embodiment 1.

[Fig. 18] Fig. 18 is a configuration diagram illustrating a configuration of an image processing apparatus according to an example embodiment 2.

[Fig. 19] Fig. 19 is a flowchart illustrating an image processing method according to the example embodiment 2.

[Fig. 20] Fig. 20 is a flowchart illustrating a specific example 1 of a height pixel number computation method according to the example embodiment 2.

[Fig. 21] Fig. 21 is a flowchart illustrating a specific example 2 of a height pixel number computation method according to the example embodiment 2.

[Fig. 22] Fig. 22 is a flowchart illustrating the specific example 2 of the height pixel number computation method according to the example embodiment 2.

[Fig. 23] Fig. 23 is a flowchart illustrating a normalization method according to the example embodiment 2.

[Fig. 24] Fig. 24 is a diagram illustrating a human model according to the example embodiment 2.

[Fig. 25] Fig. 25 is a diagram illustrating a detection example of a skeleton structure according to the example embodiment 2.

[Fig. 26] Fig. 26 is a diagram illustrating a detection example of a skeleton structure according to the example embodiment 2.

[Fig. 27] Fig. 27 is a diagram illustrating a detection example of a skeleton structure according to the example embodiment 2.

[Fig. 28] Fig. 28 is a diagram illustrating a human model according to the example embodiment 2.

[Fig. 29] Fig. 29 is a diagram illustrating a detection example of a skeleton structure according to the example embodiment 2.

[Fig. 30] Fig. 30 is a histogram for describing the height pixel number computation method according to the example embodiment 2.

[Fig. 31] Fig. 31 is a diagram illustrating a detection example of a skeleton structure according to the example embodiment 2.

[Fig. 32] Fig. 32 is a diagram illustrating a three-dimensional human model according to the example embodiment 2.

[Fig. 33] Fig. 33 is a diagram for describing the height pixel number computation method according to the example embodiment 2.

[Fig. 34] Fig. 34 is a diagram for describing the height pixel number computation method according to the example embodiment 2.

[Fig. 35] Fig. 35 is a diagram for describing the height pixel number computation method according to the example embodiment 2.

[Fig. 36] Fig. 36 is a diagram for describing the normalization method according to the example embodiment 2.

[Fig. 37] Fig. 37 is a diagram for describing the normalization method according to the example embodiment 2.

[Fig. 38] Fig. 38 is a diagram for describing the normalization method according to the example embodiment 2.

[Fig. 39] Fig. 39 is a diagram schematically illustrating one example of information processed by the image processing apparatus.

[Fig. 40] Fig. 40 is a diagram schematically illustrating one example of information processed by the image processing apparatus.

[Fig. 41] Fig. 41 is a diagram illustrating a hardware configuration example of the image processing apparatus.

[Fig. 42] Fig. 42 is a diagram schematically illustrating one example of a screen output from the image processing apparatus.

[Fig. 43] Fig. 43 is a diagram schematically illustrating one example of a screen output from the image processing apparatus.

[Fig. 44] Fig. 44 is a diagram schematically illustrating one example of a screen output from the image processing apparatus.

[Fig. 45] Fig. 45 is a diagram schematically illustrating one example of a screen output from the image processing apparatus.

[Fig. 46] Fig. 46 is a diagram schematically illustrating one example of a screen output from the image processing apparatus.

[Fig. 47] Fig. 47 is a diagram schematically illustrating one example of a screen output from the image processing apparatus.

[Fig. 48] Fig. 48 is a diagram schematically illustrating one example of a screen output from the image processing apparatus.

[Fig. 49] Fig. 49 is a flowchart illustrating one example of a flow of processing of the image processing apparatus.

[Fig. 50] Fig. 50 is a flowchart illustrating one example of a flow of processing of the image processing apparatus.

[Fig. 51] Fig. 51 is a diagram schematically illustrating one example of a screen output from the image processing apparatus.

[Fig. 52] Fig. 52 is a diagram schematically illustrating one example of a screen output from the image processing apparatus.

[Description of Embodiments]

Hereinafter, example embodiments of the present invention will be described with reference to the drawings. Note that, in all of the drawings, a similar component has a similar reference sign, and description thereof will be appropriately omitted.

(Consideration for Example Embodiment)

In recent years, an image recognition technique using machine learning such as deep learning is applied to various systems. For example, application to a surveillance system for performing surveillance by an image of a surveillance camera has been advanced. By using machine learning in the surveillance system, a state such as a pose and behavior of a person is being recognizable from an image to some extent.

However, in such a related technique, a state of a person desired by a user may not be necessarily recognizable on demand. For example, there is a case where a state of a person desired to be searched and recognized by a user can be determined in advance, or there is a case where a determination cannot be specifically made as in an unknown state. Thus, in some cases, a state of a person desired to be searched by a user cannot be specifically specified. Further, a search or the like cannot be performed when a part of a body of a person is hidden. In the related technique, a state of a person can be searched only from a specific search condition, and thus it is difficult to flexibly search for and classify a desired state of a person.

The inventors have considered a method using a skeleton estimation technique such as Non-Patent Document 1 and the like in order to recognize a state of a person desired by a user from an image on demand. Similarly to OpenPose disclosed in Non-Patent Document 1, and the like, in the related skeleton estimation technique, a skeleton of a person is estimated by learning image data in which various correct answer patterns are set. In the following example embodiments, a state of a person can be flexibly recognized by using such a skeleton estimation technique.

Note that, a skeleton structure estimated by the skeleton estimation technique such as OpenPose is formed of a "keypoint" being a characteristic point such as a joint and a "bone (bone link)" indicating a link between keypoints. Thus, in the following example embodiments, a skeleton structure will be described by using the words "keypoint" and "bone", and "keypoint" is associated with a "joint" of a person and "bone" is associated with a "bone" of a person unless otherwise specified.

(Outline of Example Embodiment)

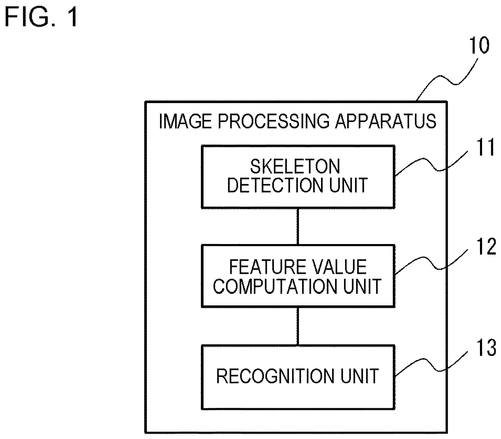

Fig. 1 illustrates an outline of an image processing apparatus 10 according to an example embodiment. As illustrated in Fig. 1, the image processing apparatus 10 includes a skeleton detection unit 11, a feature value computation unit 12, and a recognition unit 13. The skeleton detection unit 11 detects two-dimensional skeleton structures (hereinafter may be simply referred to as "skeleton structures") of a plurality of persons, based on a two-dimensional image acquired from a camera and the like. The feature value computation unit 12 computes feature values of the plurality of two-dimensional skeleton structures detected by the skeleton detection unit 11. The recognition unit 13 performs recognition processing on a state of the plurality of persons, based on a degree of similarity between the plurality of feature values computed by the feature value computation unit 12. The recognition processing is classification processing, search processing , and the like of a state of a person.

In this way, in the example embodiment, a two-dimensional skeleton structure of a person is detected from a two-dimensional image, and the recognition processing such as classification and a search of a state of a person is performed based on a feature value computed from the two-dimensional skeleton structure.

(Example Embodiment 1)

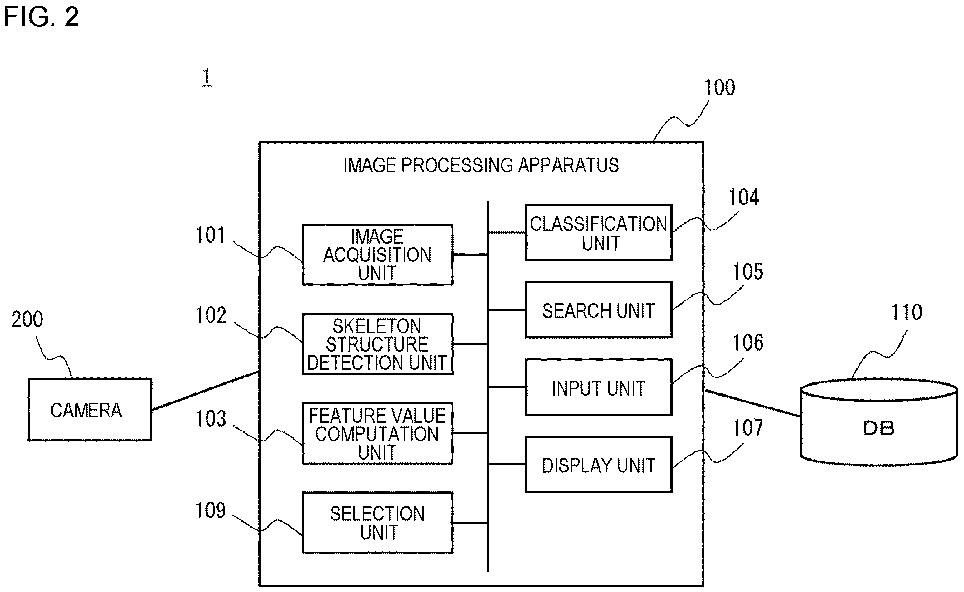

An example embodiment 1 will be described below with reference to the drawings. Fig. 2 illustrates a configuration of an image processing apparatus 100 according to the present example embodiment. The image processing apparatus 100 constitutes an image processing system 1 together with a camera 200 and a storage means (database (DB) 110). The image processing system 1 including the image processing apparatus 100 is a system for classifying and searching for a state such as a pose and behavior of a person, based on a skeleton structure of the person estimated from an image.

The camera 200 is a capturing unit, such as a surveillance camera, that generates a two-dimensional image. The camera 200 is installed at a predetermined place, and captures a person and the like in a capturing region from the installed place. The camera 200 may be directly connected in a wired or wireless manner in such a way as to be able to output a captured image (video) to the image processing apparatus 100, or may be connected via any communication network and the like. Note that, the camera 200 may be provided inside the image processing apparatus 100.

The database 110 is a database that stores information (data) needed for processing of the image processing apparatus 100, a processing result, and the like. The database 110 stores an image acquired by an image acquisition unit 101, a detection result of a skeleton structure detection unit 102, data for machine learning, a feature value computed by a feature value computation unit 103, a classification result of a classification unit 104, a search result of a search unit 105, and the like. The database 110 is directly connected to the image processing apparatus 100 in a wired or wireless manner in such a way as to be able to input and output data as necessary, or is connected to the image processing apparatus 100 via any communication network and the like. Note that, the database 110 may be provided inside the image processing apparatus 100 as a non-volatile memory such as a flash memory, a hard disk apparatus, and the like.

As illustrated in Fig. 2, the image processing apparatus 100 includes the image acquisition unit 101, the skeleton structure detection unit 102, the feature value computation unit 103, the classification unit 104, the search unit 105, an input unit 106, a display unit 107, and a selection unit 109. Note that, a configuration of each unit (block) is one example, and other each unit may be used for a configuration as long as a method (operation) described below can be achieved. Further, the image processing apparatus 100 is achieved by a computer apparatus, such as a personal computer and a server, that executes a program, for example, but may be achieved by one apparatus or may be achieved by a plurality of apparatuses on a network. For example, the input unit 106, the display unit 107, and the like may be an external apparatus. Further, both of the classification unit 104 and the search unit 105 may be provided, or only one of them may be provided. Both or one of the classification unit 104 and the search unit 105 is the recognition unit 13 that performs the recognition processing on a state of a person. Further, the search unit 105 and the selection unit 109 are a functional unit that performs the search processing, and correspond to the recognition unit 13 in Fig. 1.

The image processing apparatus 100 performs data accumulation processing, the classification processing, and the search processing in this order. Note that, as described below, the image processing apparatus 100 may not perform the classification processing.

<Data Accumulation Processing>

The data accumulation processing is processing of acquiring an image (hereinafter an "analysis target image") being an analysis target, detecting a two-dimensional skeleton structure of a person from each of a plurality of the analysis target images, computing a feature value of the detected two-dimensional skeleton structure, and storing the computed feature value in association with each of the analysis target images in the database 110. Hereinafter, a configuration of a functional unit related to the data accumulation processing will be described.

The image acquisition unit 101 acquires an analysis target image. In the present specification, "acquisition" includes at least any one of "acquisition of data stored in another apparatus or a storage medium by its own apparatus (active acquisition)", based on a user input or an instruction of a program, such as reception by making a request or an inquiry to another apparatus and reading by accessing to another apparatus or a storage medium, "inputting of data output to its own apparatus from another apparatus (passive acquisition)", based on a user input or an instruction of a program, such as reception of data to be distributed (transmitted, push-notified, or the like) and acquisition by selection from among received data or received information, and "generation of new data by editing data (such as texting, sorting of data, extraction of a part of data, and change of a file format) and the like, and acquisition of the new data".

For example, the image acquisition unit 101 acquires, as an analysis target image, a two-dimensional image that is captured by the camera 200 in a predetermined surveillance period and includes a person. In addition, the image acquisition unit 101 may acquire, as an analysis target image, a two-dimensional image that is stored in a storage means such as the database 110 and includes a person.

The skeleton structure detection unit 102 detects a two-dimensional skeleton structure of a person from each of the acquired analysis target images. The skeleton structure detection unit 102 can detect a skeleton structure for all persons recognized in the analysis target images. The skeleton structure detection unit 102 detects a skeleton structure of a person, based on a feature to be recognized such as a joint of the person, by using a skeleton estimation technique using machine learning. The skeleton structure detection unit 102 uses a skeleton estimation technique such as OpenPose in Non-Patent Document 1, for example, and extracts a keypoint being a characteristic point such as a joint.

The feature value computation unit 103 computes a feature value of the detected two-dimensional skeleton structure, and stores, in the database 110, the computed feature value in association with the analysis target image in which the two-dimensional skeleton structure is detected. The feature value of the skeleton structure indicates a feature of a skeleton of the person, and is an element for classifying and searching for a state of the person, based on the skeleton of the person. This feature value normally includes a plurality of parameters (for example, a classification element described below). The feature value may be a feature value of the entire skeleton structure, may be a feature value of a part of the skeleton structure, or may include a plurality of feature values as in each portion of the skeleton structure. A method for computing a feature value may be any method such as machine learning and normalization, and a minimum value and a maximum value may be acquired as normalization. As one example, the feature value is a feature value acquired by performing machine learning on the skeleton structure, a size of the skeleton structure from a head to a foot on an image, and the like. The size of the skeleton structure is a height in an up-down direction, an area, and the like of a skeleton region including the skeleton structure on an image. The up-down direction (a height direction or a vertical direction) is a direction (Y-axis direction) of up and down in an image, and is, for example, a direction perpendicular to the ground (reference surface). Further, a left-right direction (a horizontal direction) is a direction (X-axis direction) of left and right in an image, and is, for example, a direction parallel to the ground.

Note that, in order to perform classification and a search desired by a user, a feature value having robustness with respect to classification and search processing is preferably used. For example, when a user desires classification and a search that do not depend on an orientation and a body shape of a person, a feature value that is robust with respect to the orientation and the body shape of the person may be used. A feature value that does not depend on an orientation and a body shape of a person can be acquired by learning skeletons of persons facing in various directions with the same pose and skeletons of persons having various body shapes with the same pose, and extracting a feature only in the up-down direction of a skeleton.

<Classification Processing>

The classification processing is processing of classifying (grouping), together, a plurality of two-dimensional skeleton structures that are detected from analysis target images and have similar feature values, based on data (data in which the analysis target image and a feature value of the two-dimensional skeleton structures detected from each of the analysis target images are associated with each other) stored in the database 110 in the data accumulation processing. Note that, the analysis target image and the two-dimensional skeleton structure detected from each of the analysis target images are associated with each other. Thus, classification of a plurality of the two-dimensional skeleton structures by the classification processing is also classification of a plurality of the analysis target images. The classification processing puts, together, a plurality of analysis target images including similar two-dimensional skeleton structures. Hereinafter, a configuration of a functional unit related to the classification processing will be described.

The classification unit 104 classifies a plurality of skeleton structures stored in the database 110, based on a degree of similarity between feature values of the skeleton structures (performs clustering). It can also be said that, as the recognition processing on a state of a person, the classification unit 104 classifies states of a plurality of persons, based on feature values of the skeleton structures. The degree of similarity is a distance between the feature values of the skeleton structures. The classification unit 104 may perform classification by a degree of similarity between feature values of the entire skeleton structures, may perform classification by a degree of similarity between feature values of a part of the skeleton structures, and may perform classification by a degree of similarity between feature values of a first portion (for example, both hands) and a second portion (for example, both feet) of the skeleton structures. Note that, a pose of a person may be classified based on a feature value of a skeleton structure of the person in each image, and behavior of a person may be classified based on a change in a feature value of a skeleton structure of the person in a plurality of images successive in time series. In other words, the classification unit 104 can classify a state of a person including a pose and behavior of the person, based on a feature value of a skeleton structure. For example, the classification unit 104 sets, as classification targets, a plurality of skeleton structures in a plurality of images captured in a predetermined surveillance period. The classification unit 104 acquires a degree of similarity between feature values of classification targets, and performs classification in such a way that skeleton structures having a high degree of similarity are in the same cluster (group with a similar pose). Note that, similarly to a search, a user may be able to specify a classification condition. The classification unit 104 can store a classification result of the skeleton structure in the database 110, and also display the classification result on the display unit 107.

<Search Processing>

The search processing is processing of searching for a predetermined skeleton structure from among a plurality of two-dimensional skeleton structures detected from analysis target images, based on data (data in which the analysis target image and the feature value of the two-dimensional skeleton structures detected from each of the analysis target images are associated with each other) stored in the database 110 in the data accumulation processing. Note that, the analysis target image and the two-dimensional skeleton structure detected from each of the analysis target images are associated with each other. Thus, an analysis target image including a predetermined skeleton structure can be searched by the "processing of searching for a predetermined skeleton structure from among a plurality of two-dimensional skeleton structures detected from analysis target images" described above. Hereinafter, a configuration of a functional unit related to the search processing will be described.

The image acquisition unit 101 acquires a query image. The image acquisition unit 101 can acquire a query image by any of the following acquisition examples, for example.

"Acquisition Example 1"

In the example, the image acquisition unit 101 acquires any of analysis target images as a query image. For example, the image acquisition unit 101 may select a predetermined number of analysis target images by a predetermined rule from each of a plurality of groups generated in the classification processing described above, and set the selected analysis target image as a query image.

"Acquisition Example 2"

In the example, the image acquisition unit 101 acquires a query image being prepared by a user and input to the image processing apparatus 100.

"Acquisition Example 3"

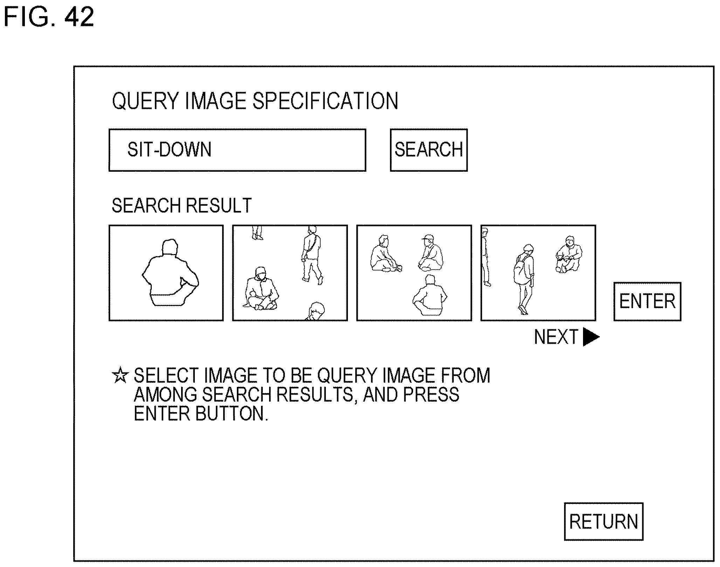

In the example, the image acquisition unit 101 acquires, as a query image, an image being searched by a keyword specified by a user. Fig. 42 illustrates one example of a user interface (UI) screen used for the search. An input column of a keyword and a display column of a search result are illustrated. In a case of the UI screen, an image selected by a user from among images displayed as search results is a query image. For a keyword, a content related to a state (such as a pose and behavior) of a person, such as "sitting" and "standing", is assumed. An input of a keyword can be achieved by using a known GUI such as a text box, drop-down, and a check box, for example.

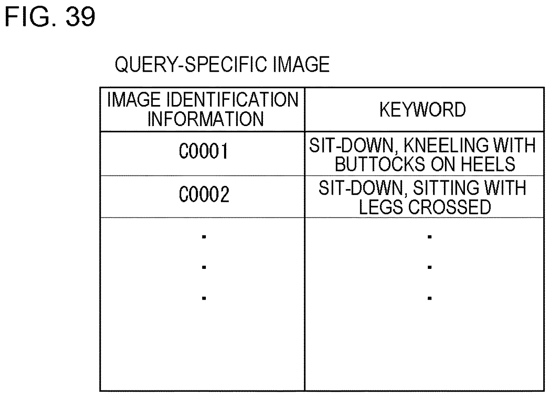

For example, as illustrated in Fig. 39, information in which an image (hereinafter a "query-specific image") prepared to be used as a query image and a keyword (word indicating a state of a person included in each image) are associated with each other may be registered in advance in the database 110. Then, the image acquisition unit 101 may search for a query-specific image associated with an input keyword from the information, and acquire, as a query image, a part or the whole of the query-specific image included in a search result.

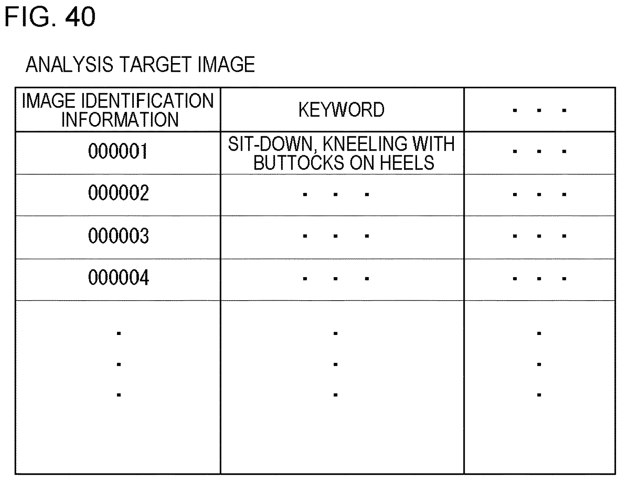

In addition, as illustrated in Fig. 40, information in which a part of an analysis target image and a keyword (word indicating a state of a person included in each image) are associated with each other may be registered in the database 110. Then, the image acquisition unit 101 may search for an analysis target image associated with an input keyword from the information, and acquire, as a query image, a part or the whole of the analysis target image included in a search result.

In addition, the image acquisition unit 101 may transmit an input keyword to a search engine that searches for an image related to the keyword, and acquire a search result from the search engine. Then, the image acquisition unit 101 may acquire, as a query image, a part or the whole of the image included in the search result.

The selection unit 109 selects at least one person included in a query image, based on a user input. A query image may include one person, and may include a plurality of persons. When a query image includes a plurality of persons, the selection unit 109 selects at least one person from the plurality of persons included in the query image, based on a user input. The selection unit 109 can achieve the selection by any of the following two techniques, for example.

"Processing Example 1 of Selecting At Least One Person Included in Query Image"

In the example, the selection unit 109 receives a user input that freely specifies a partial region in an image. Then, the selection unit 109 selects a person detected in the specified partial region. The "person detected in the specified partial region" is a person whose body is completely included in the specified partial region, or a person whose at least a part of a body is included in the specified partial region. Details will be described below.

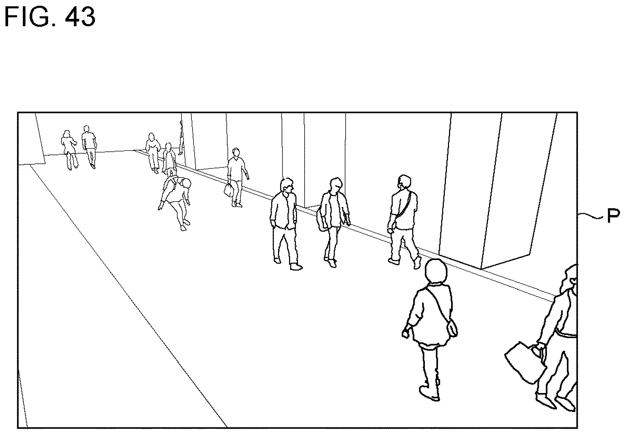

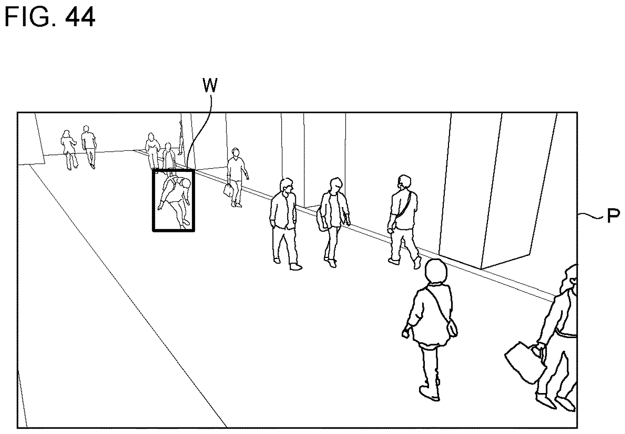

For example, it is assumed that the image acquisition unit 101 acquires a query image P as illustrated in Fig. 43. The selection unit 109 displays the query image P on the display unit 107, and receives a user input that specifies at least a partial region in the query image P. For example, the selection unit 109 may receive a user input that specifies a partial region by a user input that surrounds the partial region by a frame W as illustrated in Fig. 44. A position and a size of the frame W in the image can be freely specified by a user.

After the selection unit 109 receives the user input that specifies at least the partial region in the query image P, the selection unit 109 selects a person detected in the specified partial region. Hereinafter, one example of the processing will be described.

-Processing Example 1 of Selecting Person Detected in Specified Partial Region-

The selection unit 109 performs processing of detecting a person on an image in a specified partial region or an image including a specified partial region and a periphery thereof. Then, the selection unit 109 selects a person whose body is completely included in the specified partial region, or a person whose at least a part of a body is included in the specified partial region. The processing of detecting a person from an image can adopt every known technique.

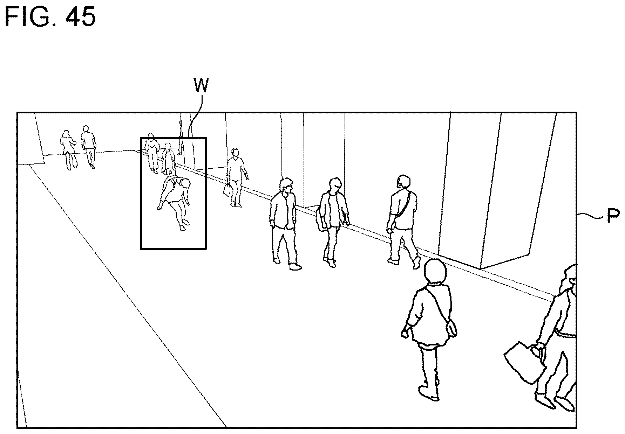

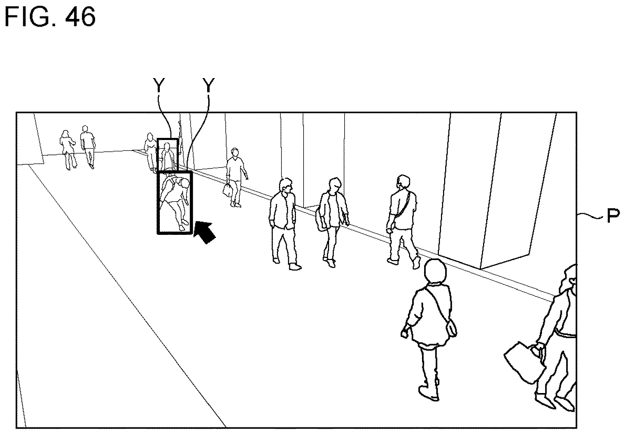

Note that, when a plurality of persons are present in a partial region (region in the frame W) specified as illustrated in Fig. 45, and the plurality of persons are detected in the region, the selection unit 109 may display each of the plurality of detected persons in an identifiable manner as illustrated in Fig. 46, and further receive a user input that specifies at least a part (a part or the whole) from the plurality of detected persons. Then, the selection unit 109 may select a person specified by the user input. In Fig. 46, each of the detected persons in the specified partial region is identifiable by a frame Y.

-Processing Example 2 of Selecting Person Detected in Specified Partial Region-

The selection unit 109 performs processing of detecting a person on a whole query image (whole region in an image), and detects a person region being a region in which a person is present. The person region may be a rectangular region, or may be a region along a contour of the person. The processing of detecting a person from an image can adopt every known technique. Examples of a technique for detecting a region along a contour of a person include semantic segmentation, instance segmentation, a difference computation from a prepared background image, contour extraction processing, and the like, which are not limited thereto. Then, the selection unit 109 determines, from the detected person region, a person region completely included in the specified partial region, or a person region having a part included in the specified partial region, and selects the person present in the determined person region.

Note that, when a plurality of persons are present in a partial region (region in the frame W) specified as illustrated in Fig. 45, and a plurality of person regions are detected in the region, the selection unit 109 may display each of the plurality of detected person regions in an identifiable manner as illustrated in Fig. 46, and receive a user input that specifies at least a part (a part or the whole) from the plurality of detected person regions. Then, the selection unit 109 may select a person present in the person region specified by the user input. In Fig. 46, each of the detected person regions in the specified partial region is identifiable by the frame Y.

-Processing Example 3 of Selecting Person Detected in Specified Partial Region-

The skeleton structure detection unit 102 performs processing of detecting a two-dimensional skeleton structure of a person on an image in a specified partial region or an image including a specified partial region and a periphery thereof. Then, the selection unit 109 selects a person whose detected two-dimensional skeleton structure is completely included in the specified partial region, or a person whose at least a part of the detected two-dimensional skeleton structure is included in the specified partial region.

Note that, when a plurality of persons are present in a partial region (region in the frame W) specified as illustrated in Fig. 45, and a plurality of two-dimensional skeleton structures are detected in the region, the selection unit 109 may display each of the plurality of detected two-dimensional skeleton structures in an identifiable manner as illustrated in Fig. 46, and receive a user input that specifies at least a part (a part or the whole) from the plurality of detected two-dimensional skeleton structures. Then, the selection unit 109 may select a person having the two-dimensional skeleton structure specified by the user input. In Fig. 46, each of the detected two-dimensional skeleton structures in the specified partial region is identifiable by the frame Y.

-Processing Example 4 of Selecting Person Detected in Specified Partial Region-

The skeleton structure detection unit 102 performs processing of detecting a two-dimensional skeleton structure of a person on a whole query image (whole region in an image). Then, the selection unit 109 selects a person whose detected two-dimensional skeleton structure is completely included in the specified partial region, or a person whose at least a part of the detected two-dimensional skeleton structure is included in the specified partial region.

Note that, when a plurality of persons are present in a partial region (region in the frame W) specified as illustrated in Fig. 45, and a plurality of two-dimensional skeleton structures are detected in the region, the selection unit 109 may display each of the plurality of detected two-dimensional skeleton structures in an identifiable manner as illustrated in Fig. 46, and receive a user input that specifies at least a part (a part or the whole) from the plurality of detected two-dimensional skeleton structures. Then, the selection unit 109 may select a person having the two-dimensional skeleton structure specified by the user input. In Fig. 46, each of the detected two-dimensional skeleton structures in the specified partial region is identifiable by the frame Y.

"Processing Example 2 of Selecting At Least One Person Included in Query Image"

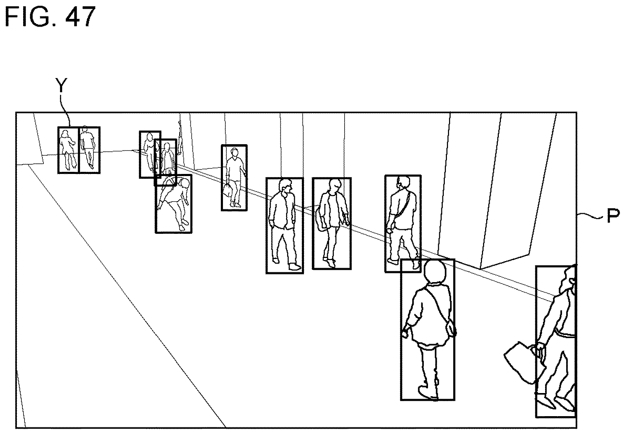

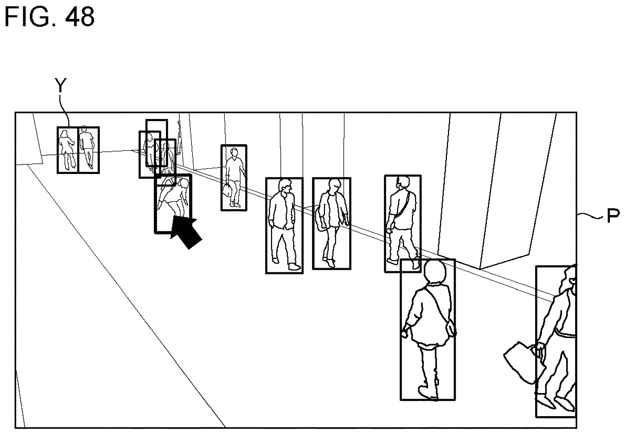

In the example, before a user input that selects a person is received, processing of detecting a person is performed on a whole query image (whole region in an image). Then, as illustrated in Fig. 47, the selection unit 109 displays, on the query image, a processed image in which a person detected in the query image is displayed as a selectable person in an identifiable manner. Then, as illustrated in Fig. 48, the selection unit 109 receives a user input that selects at least one person from among the selectable persons. Herein, one example of processing of detecting a person and processing of deciding a person to be displayed as a selectable person will be described.

-Processing Example 1 of Detecting Person and Deciding Person to be Displayed as Selectable Person-

The selection unit 109 performs processing of detecting a person on a whole query image (whole region in an image), based on processing of detecting a known person. Then, the selection unit 109 sets all detected persons as selectable persons. In addition, the selection unit 109 may set, as a selectable person, a person having a region (that represents a size of a person in an image) occupying an image equal to or more than a reference value among the detected persons. It is difficult to detect a two-dimensional skeleton structure and compute a feature value from a person having a region occupying an image smaller than a predetermined level. When a pose of such a person is set as a query for a search, a desired search result is less likely to be acquired. Thus, such a person may be excluded from a selectable person.

-Processing Example 2 of Detecting Person and Deciding Person to be Displayed as Selectable Person-

The skeleton structure detection unit 102 performs processing of detecting a two-dimensional skeleton structure of a person on a whole query image (whole region in an image). Then, the selection unit 109 sets, as a selectable person, a person whose detection result of a two-dimensional skeleton structure by the skeleton structure detection unit 102 satisfies a predetermined condition.

The person who satisfies the predetermined condition is a "person having the number of extracted keypoints equal to or more than a reference value", or a "person in which an evaluation value computed based on at least one of the number of extracted keypoints and reliability of each of the extracted keypoints is equal to or more than a reference value".

A detailed algorithm for an evaluation value computation is not particularly limited, but is designed in such a way as to satisfy the following contents.

- An evaluation value increases with a greater number of extracted keypoints.
- An evaluation value increases with a higher degree of reliability of an extracted keypoint.
- An evaluation value increases with a larger person in an image.

The skeleton structure detection unit 102 detects a two-dimensional skeleton structure of a person included in a query image. The detection processing of the skeleton structure detection unit 102 is as described in the data accumulation processing. The skeleton structure detection unit 102 may perform processing of detecting a two-dimensional skeleton structure of a person on a whole query image (whole region in an image), or may perform processing of detecting a two-dimensional skeleton structure of a person on a part of a query image (such as a region specified by a user input, and a partial region including a person selected by the selection unit 109).

The feature value computation unit 103 computes a feature value of a two-dimensional skeleton structure of the person selected by the selection unit 109. The extraction processing of the feature value computation unit 103 is as described in the data accumulation processing.

The search unit 105 searches for a skeleton structure having a high degree of similarity to a feature value (feature value of a two-dimensional skeleton structure of a person selected by the selection unit 109) of a search query (query state) from among a plurality of skeleton structures stored in the database 110 in the data accumulation processing.

For example, the search unit 105 may search for a skeleton structure having a high degree of similarity to a feature value of a search query by verifying the feature value of the search query with a feature value of a skeleton structure detected from each of a plurality of analysis target images. In a case of this configuration, the classification processing described above is not needed. However, since a verification target is all of a plurality of analysis target images, a processing load on a computer in the verification increases.

Thus, the search unit 105 may decide, by any means, a representative of a feature value of a two-dimensional skeleton structure for each group acquired in the classification processing, and search for a skeleton structure having a high degree of similarity to the feature value of the search query described above by verifying the representative with the feature value of the search query. In a case of this configuration, the number of verification targets is reduced, and thus a processing load on a computer in the verification is reduced.

Note that, an analysis target image and a two-dimensional skeleton structure detected from each of the analysis target images are associated with each other. Thus, an analysis target image including a predetermined skeleton structure (skeleton structure having a high degree of similarity to a feature value of a search query) can be searched by the "processing of searching for a predetermined skeleton structure from among a plurality of two-dimensional skeleton structures detected from analysis target images" described above. In other words, an analysis target image including a person in a state similar to a state of a person included in a query image can be searched from analysis target images.

A degree of similarity is a distance between feature values of skeleton structures. The search unit 105 may perform a search by a degree of similarity between feature values of the entire skeleton structures, may perform a search by a degree of similarity between feature values of a part of the skeleton structures, and may perform a search by a degree of similarity between feature values of a first portion (for example, both hands) and a second portion (for example, both feet) of the skeleton structures. Note that, a pose of a person may be searched based on a feature value of a skeleton structure of the person in each image, and behavior of a person may be searched based on a change in a feature value of a skeleton structure of the person in a plurality of images successive in time series. In other words, the search unit 105 can search for a state of a person including a pose and behavior of the person, based on a feature value of a skeleton structure. For example, the search unit 105 sets, as search targets, feature values of a plurality of skeleton structures in a plurality of analysis target images captured in a predetermined surveillance period.

The input unit 106 is an input interface that acquires information input from a user who operates the image processing apparatus 100. For example, the user is a supervisor who surveys a person in a suspicious state from an image of a surveillance camera. The input unit 106 is, for example, a graphical user interface (GUI), and receives an input of information according to an operation of the user from an input apparatus such as a keyboard, a mouse, a touch panel, a microphone, and a physical button.

The display unit 107 is a display unit that displays a result of an operation (processing) of the image processing apparatus 100, and the like, and is, for example, a display apparatus such as a liquid crystal display and an organic electro luminescence (EL) display. The display unit 107 displays a classification result of the classification unit 104, a search result of the search unit 105, an evaluation value of a candidate of a query image described above, and the like.

Next, one example of a hardware configuration of the image processing apparatus 100 will be described. Each functional unit of the image processing apparatus 100 is achieved by any combination of hardware and software concentrating on a central processing unit (CPU) of any computer, a memory, a program loaded into the memory, a storage unit (that can also store a program downloaded from a storage medium such as a compact disc (CD), a server on the Internet, and the like in addition to a program previously stored at a stage of shipping of an apparatus) such as a hard disk that stores the program, and a network connection interface. Then, various modification examples of an achievement method and an apparatus thereof are understood by a person skilled in the art.

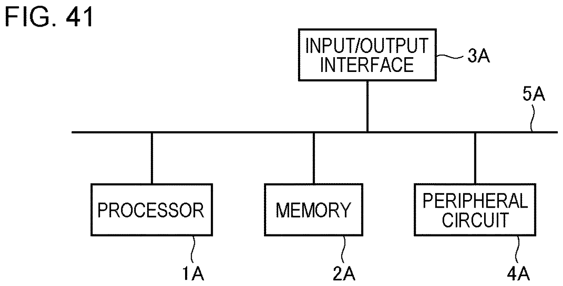

Fig. 41 is a block diagram illustrating a hardware configuration of the image processing apparatus 100. As illustrated in Fig. 41, the image processing apparatus 100 includes a processor 1A, a memory 2A, an input/output interface 3A, a peripheral circuit 4A, and a bus 5A. Various modules are included in the peripheral circuit 4A. The image processing apparatus 100 may not include the peripheral circuit 4A. Note that, the image processing apparatus 100 may be formed of a plurality of apparatuses separated physically and/or logically, or may be formed of one apparatus integrated physically and/or logically. When the image processing apparatus 100 is formed of a plurality of apparatuses separated physically and/or logically, each of the plurality of apparatuses can include the hardware configuration described above.

The bus 5A is a data transmission path for the processor 1A, the memory 2A, the peripheral circuit 4A, and the input/output interface 3A to transmit and receive data to and from one another. The processor 1A is an arithmetic processing apparatus such as a CPU and a graphics processing unit (GPU), for example. The memory 2A is a memory such as a random access memory (RAM) and a read only memory (ROM), for example. The input/output interface 3A includes an interface for acquiring information from an input apparatus, an external apparatus, an external server, an external sensor, a camera, and the like, an interface for outputting information to an output apparatus, an external apparatus, an external server, and the like, and the like. The input apparatus is, for example, a keyboard, a mouse, a microphone, a physical button, a touch panel, and the like. The output apparatus is, for example, a display, a speaker, a printer, a mailer, and the like. The processor 1A can output an instruction to each of modules, and perform an arithmetic operation, based on an arithmetic result of the modules.

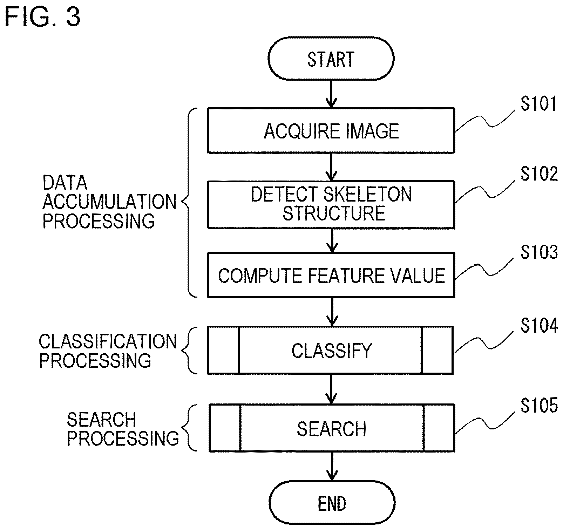

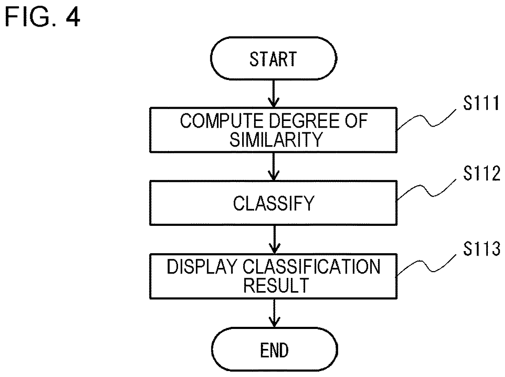

Figs. 3 to 5, Fig. 49, and Fig. 50 each illustrate a flow of processing of the image processing apparatus 100 according to the present example embodiment. Fig. 3 illustrates a flow from image acquisition to search processing in the image processing apparatus 100, Fig. 4 illustrates a flow of classification processing (S104) in Fig. 3, and Figs. 5, 49, and 50 each illustrate a flow of the search processing (S105) in Fig. 3.

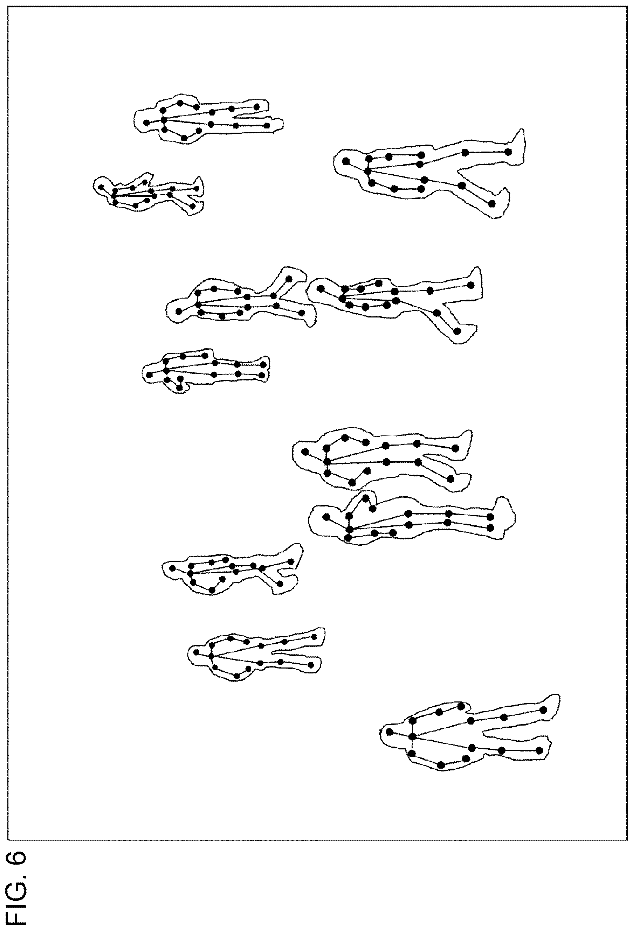

As illustrated in Fig. 3, the image acquisition unit 101 acquires a plurality of analysis target images (S101). Subsequently, the skeleton structure detection unit 102 detects a two-dimensional skeleton structure of a person from each of the plurality of acquired analysis target images (S102). Fig. 6 illustrates a detection example of skeleton structures. As illustrated in Fig. 6, a plurality of persons may be included in an analysis target image. In this case, the skeleton structure detection unit 102 detects a skeleton structure for each of the persons included in the analysis target images.

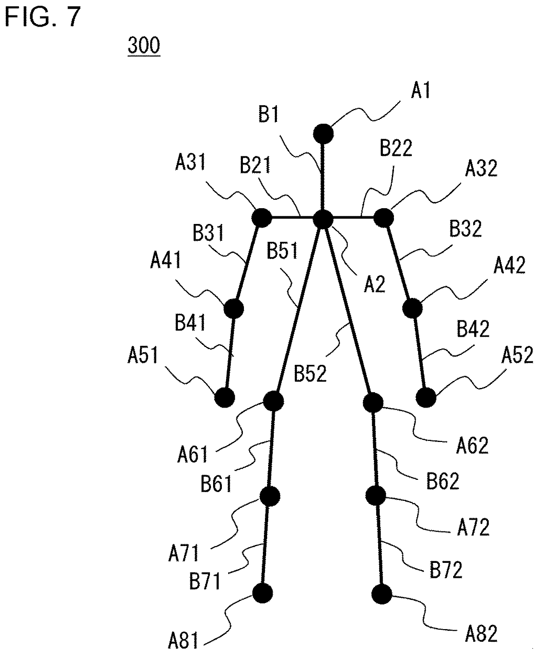

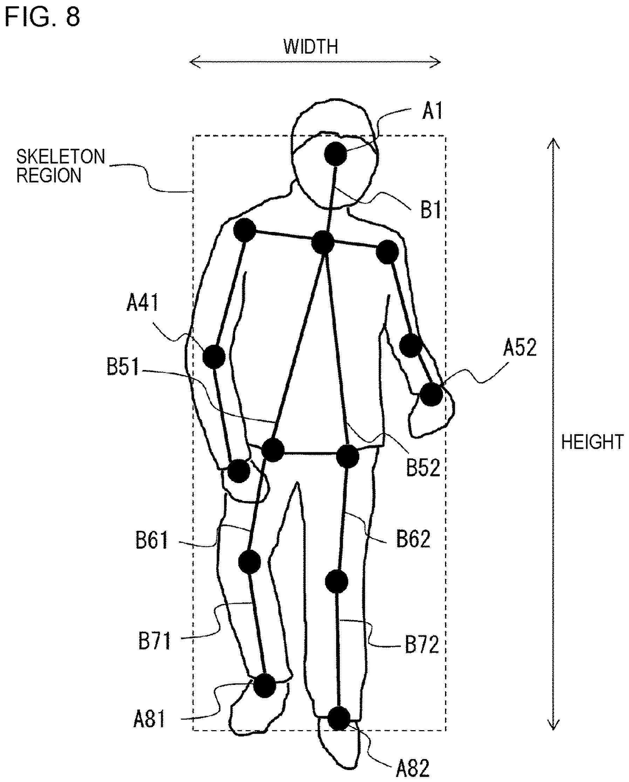

Fig. 7 illustrates a skeleton structure of a human model 300 detected at this time, and Figs. 8 to 10 each illustrate a detection example of the skeleton structure. The skeleton structure detection unit 102 detects the skeleton structure of the human model (two-dimensional skeleton model) 300 as in Fig. 7 from a two-dimensional image by using a skeleton estimation technique such as OpenPose. The human model 300 is a two-dimensional model formed of a keypoint such as a joint of a person and a bone connecting keypoints.

For example, the skeleton structure detection unit 102 extracts a feature point that may be a keypoint from an image, refers to information acquired by performing machine learning on the image of the keypoint, and detects each keypoint of a person. In the example illustrated in Fig. 7, as a keypoint of a person, a head A1, a neck A2, a right shoulder A31, a left shoulder A32, a right elbow A41, a left elbow A42, a right hand A51, a left hand A52, a right waist A61, a left waist A62, a right knee A71, a left knee A72, a right foot A81, and a left foot A82 are detected. Furthermore, as a bone of the person connecting the keypoints, a bone B1 connecting the head A1 and the neck A2, a bone B21 connecting the neck A2 and the right shoulder A31, a bone B22 connecting the neck A2 and the left shoulder A32, a bone B31 connecting the right shoulder A31 and the right elbow A41, a bone B32 connecting the left shoulder A32 and the left elbow A42, a bone B41 connecting the right elbow A41 and the right hand A51, a bone B42 connecting the left elbow A42 and the left hand A52, a bone B51 connecting the neck A2 and the right waist A61, a bone B52 connecting the neck A2 and the left waist A62, a bone B61 connecting the right waist A61 and the right knee A71, a bone B62 connecting the left waist A62 and the left knee A72, a bone B71 connecting the right knee A71 and the right foot A81, and a bone B72 connecting the left knee A72 and the left foot A82 are detected. The skeleton structure detection unit 102 stores the detected skeleton structure of the person in the database 110.

Fig. 8 is an example of detecting a person in a standing state. In Fig. 8, the standing person is captured from the front, the bone B1, the bone B51 and the bone B52, the bone B61 and the bone B62, and the bone B71 and the bone B72 that are viewed from the front are each detected without overlapping, and the bone B61 and the bone B71 of a right leg are bent slightly more than the bone B62 and the bone B72 of a left leg.

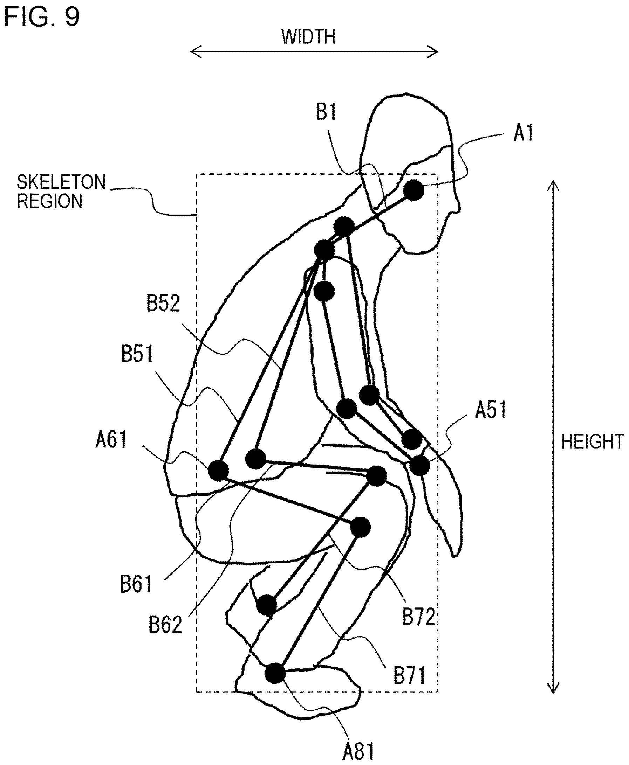

Fig. 9 is an example of detecting a person in a squatting state. In Fig. 9, the squatting person is captured from a right side, the bone B1, the bone B51 and the bone B52, the bone B61 and the bone B62, and the bone B71 and the bone B72 that are viewed from the right side are each detected, and the bone B61 and the bone B71 of a right leg and the bone B62 and the bone B72 of a left leg are greatly bent and also overlap.

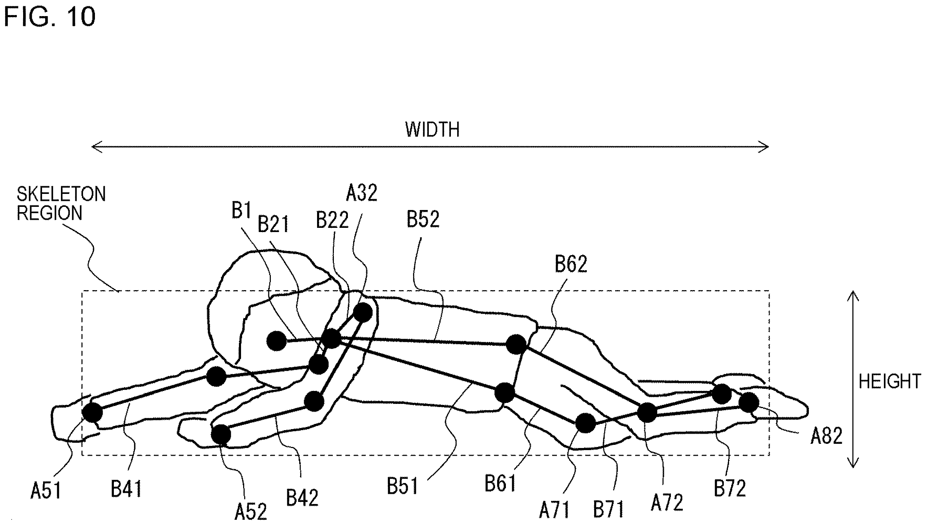

Fig. 10 is an example of detecting a person in a sleeping state. In Fig. 10, the sleeping person is captured diagonally from the front left, the bone B1, the bone B51 and the bone B52, the bone B61 and the bone B62, and the bone B71 and the bone B72 that are viewed diagonally from the front left are each detected, and the bone B61 and the bone B71 of a right leg and the bone B62 and the bone B72 of a left leg are bent and also overlap.

Subsequently, as illustrated in Fig. 3, the feature value computation unit 103 computes a feature value of the detected skeleton structure (S103). For example, when a height and an area of a skeleton region are set as a feature value, the feature value computation unit 103 extracts a region including the skeleton structure and acquires a height (pixel number) and an area (pixel area) of the region. The height and the area of the skeleton region are acquired from coordinates of an end portion of the extracted skeleton region and coordinates of a keypoint of the end portion. The feature value computation unit 103 stores the acquired feature value of the skeleton structure in the database 110. Note that, the feature value of the skeleton structure is also used as information indicating a state of the person.

In the example in Fig. 8, a skeleton region including all of the bones is extracted from the skeleton structure of the standing person. In this case, an upper end of the skeleton region is the keypoint A1 of the head, a lower end of the skeleton region is the keypoint A82 of the left foot, a left end of the skeleton region is the keypoint A41 of the right elbow, and a right end of the skeleton region is the keypoint A52 of the left hand. Thus, a height of the skeleton region is acquired from a difference in Y coordinate between the keypoint A1 and the keypoint A82. Further, a width of the skeleton region is acquired from a difference in X coordinate between the keypoint A41 and the keypoint A52, and an area is acquired from the height and the width of the skeleton region.

In the example in Fig. 9, a skeleton region including all of the bones is extracted from the skeleton structure of the squatting person. In this case, an upper end of the skeleton region is the keypoint A1 of the head, a lower end of the skeleton region is the keypoint A81 of the right foot, a left end of the skeleton region is the keypoint A61 of the right waist, and a right end of the skeleton region is the keypoint A51 of the right hand. Thus, a height of the skeleton region is acquired from a difference in Y coordinate between the keypoint A1 and the keypoint A81. Further, a width of the skeleton region is acquired from a difference in X coordinate between the keypoint A61 and the keypoint A51, and an area is acquired from the height and the width of the skeleton region.

In the example in Fig. 10, a skeleton region including all of the bones is extracted from the skeleton structure of the sleeping person. In this case, an upper end of the skeleton region is the keypoint A32 of the left shoulder, a lower end of the skeleton region is the keypoint A52 of the left hand, a left end of the skeleton region is the keypoint A51 of the right hand, and a right end of the skeleton region is the keypoint A82 of the left foot. Thus, a height of the skeleton region is acquired from a difference in Y coordinate between the keypoint A32 and the keypoint A52. Further, a width of the skeleton region is acquired from a difference in X coordinate between the keypoint A51 and the keypoint A82, and an area is acquired from the height and the width of the skeleton region.

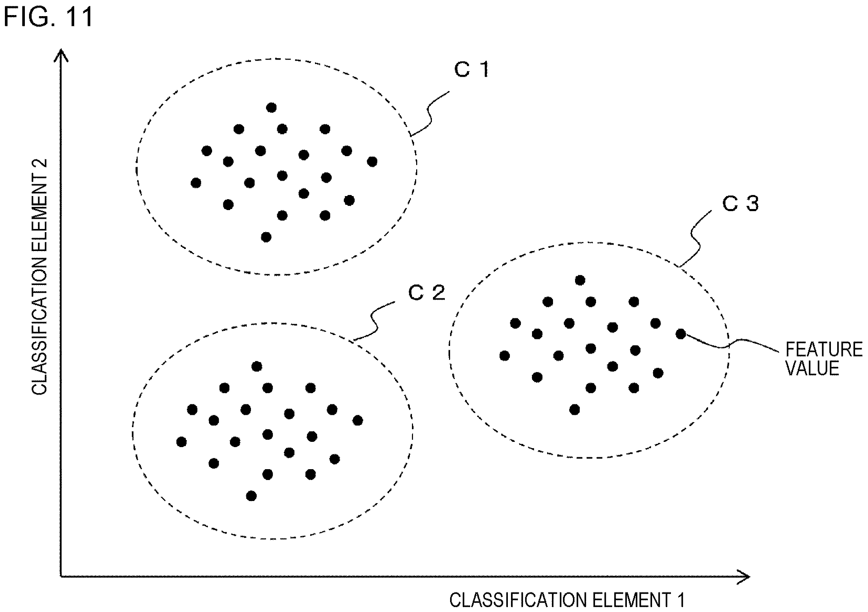

Subsequently, as illustrated in Fig. 3, the classification unit 104 performs the classification processing (S104). In the classification processing, as illustrated in Fig. 4, the classification unit 104 computes a degree of similarity of the computed feature value of the skeleton structure (S 111), and classifies the skeleton structure, based on the computed feature value (S112). The classification unit 104 acquires a degree of similarity among all of the skeleton structures that are classification targets and are stored in the database 110, and classifies skeleton structures (poses) having a highest degree of similarity in the same cluster (performs clustering). Furthermore, classification is performed by acquiring a degree of similarity between classified clusters, and classification is repeated until a predetermined number of clusters is acquired. Fig. 11 illustrates an image of a classification result of feature values of skeleton structures. Fig. 11 is an image of a cluster analysis by two-dimensional classification elements, and two classification elements are, for example, a height of a skeleton region and an area of the skeleton region, or the like. In Fig. 11, as a result of classification, feature values of a plurality of skeleton structures are classified into three clusters C1 to C3. The clusters C1 to C3 are associated with poses such as a standing pose, a sitting pose, and a sleeping pose, for example, and skeleton structures (persons) are classified for each similar pose.

In the present example embodiment, various classification methods can be used by performing classification, based on a feature value of a skeleton structure of a person. Note that, a classification method may be preset, or any classification method may be able to be set by a user. Further, classification may be performed by the same method as a search method described below. In other words, classification may be performed by a classification condition similar to a search condition. For example, the classification unit 104 performs classification by the following classification methods. Any classification method may be used, or any selected classification method may be combined.

<Classification Method 1>

Classification by a plurality of hierarchies

Classification is performed by combining, in a hierarchical manner, classification by a skeleton structure of a whole body, classification by a skeleton structure of an upper body and a lower body, classification by a skeleton structure of an arm and a leg, and the like. In other words, classification may be performed based on a feature value of a first portion and a second portion of a skeleton structure, and, furthermore, classification may be performed by assigning weights to the feature value of the first portion and the second portion.

<Classification Method 2>

Classification by a plurality of images along time series

Classification is performed based on a feature value of a skeleton structure in a plurality of images successive in time series. For example, classification may be performed based on a cumulative value by accumulating a feature value in a time series direction. Furthermore, classification may be performed based on a change (change value) in a feature value of a skeleton structure in a plurality of successive images.

<Classification Method 3>

Classification by ignoring the left and the right of a skeleton structure Classification is performed on an assumption that reverse skeleton structures on a right side and a left side of a person are the same skeleton structure.

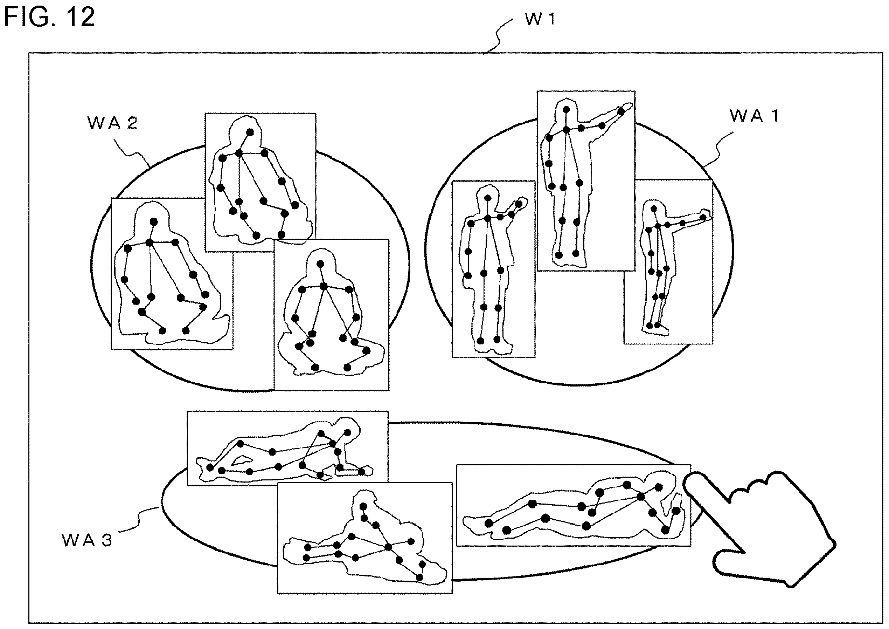

Furthermore, the classification unit 104 displays a classification result of the skeleton structure (S113). The classification unit 104 acquires a necessary image of a skeleton structure and a person from the database 110, and displays, on the display unit 107, the skeleton structure and the person for each similar pose (cluster) as a classification result. Fig. 12 illustrates a display example when poses are classified into three. For example, as illustrated in Fig. 12, pose regions WA1 to WA3 for each pose are displayed on a display window W1, and a skeleton structure and a person (image) of each associated pose are displayed in the pose regions WA1 to WA3. The pose region WA1 is, for example, a display region of a standing pose, and displays a skeleton structure and a person that are classified into the cluster C1 and are similar to the standing pose. The pose region WA2 is, for example, a display region of a sitting pose, and displays a skeleton structure and a person that are classified into the cluster C2 and are similar to the sitting pose. The pose region WA3 is, for example, a display region of a sleeping pose, and displays a skeleton structure and a person that are classified into the cluster C2 and are similar to the sleeping pose.

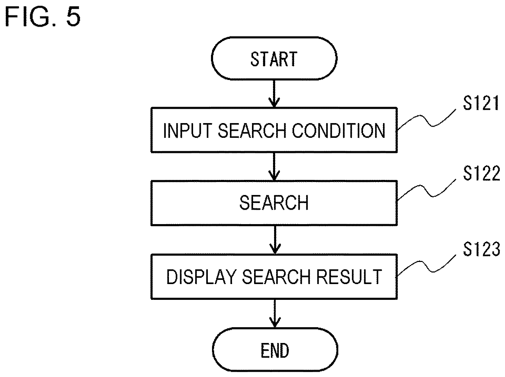

Subsequently, as illustrated in Fig. 3, the image processing apparatus 100 performs the search processing (S105). In the search processing, as illustrated in Fig. 5, the image processing apparatus 100 receives an input of a search condition (S121).

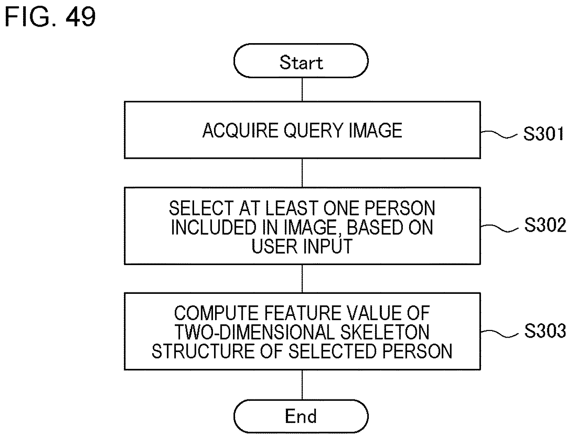

One example of the processing in S121 will be described by using Fig. 49. The image acquisition unit 101 acquires a query image, based on any of the acquisition examples 1 to 3 described above (S301). Next, the selection unit 109 selects at least one person included in the query image, based on the processing example 1 or 2 of selecting at least one person included in the query image described above (S302). Next, the feature value computation unit 103 computes a feature value of a two-dimensional skeleton structure of the person selected in S302 (S303). The feature value of the two-dimensional skeleton structure is a search query.

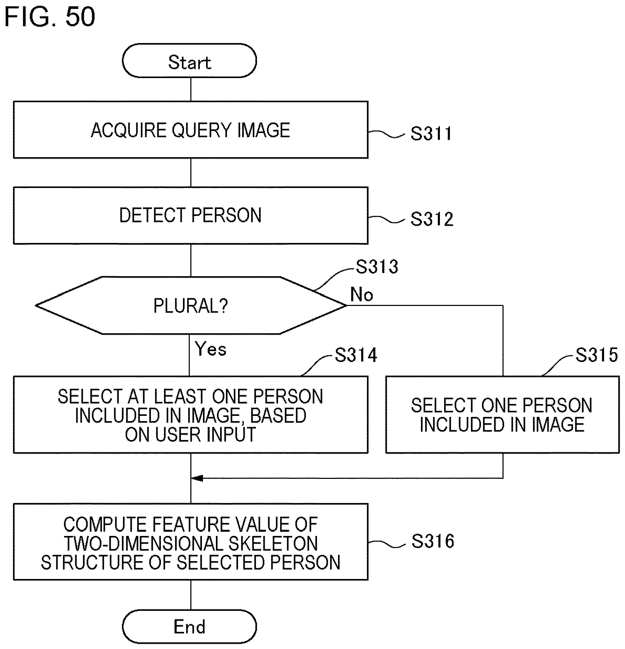

Another example of the processing in S121 will be described by using Fig. 50. The image acquisition unit 101 acquires a query image, based on any of the acquisition examples 1 to 3 described above (S311). Next, the image processing apparatus 100 performs processing of detecting a person on the query image (S312). For example, the selection unit 109 may perform processing of detecting a person on a whole query image (whole region in an image), based on processing of detecting a known person. In addition, the skeleton structure detection unit 102 may perform processing of detecting a two-dimensional skeleton structure of a person on a whole query image (whole region in an image).

Then, when the number of persons included in the image determined based on a result of the detection processing in S3 12 is plural (Yes in S3 13), the selection unit 109 selects at least one person from the plurality of persons included in the image (S314). Subsequently, the feature value computation unit 103 computes a feature value of a two-dimensional skeleton structure of the at least one person selected in S314 (S3 16). The feature value of the two-dimensional skeleton structure is a search query. The processing in 314 and S316 is similar to the processing in S302 and S303 in Fig. 49.

On the other hand, when the number of persons included in the image determined based on a result of the detection processing in S3 12 is one (No in S3 13), the selection unit 109 selects the detected one person (S3 15). Then, the feature value computation unit 103 computes a feature value of a two-dimensional skeleton structure of the one person selected in S315 (S316). The feature value of the two-dimensional skeleton structure is a search query.

Note that, the "number of persons included in the image determined based on a result of the detection processing in S3 12" may be the number of persons detected in S3 12, or may be the number of "selectable persons" described above. A concept of the "selectable person" is as described in "Processing Examples 1 and 2 of Detecting Person and Deciding Person to be Displayed as Selectable Person".

Returning to Fig. 5, subsequently, the search unit 105 searches for a skeleton structure, based on the search condition (S122). With the skeleton structure specified by the user as the search query, the search unit 105 searches for a skeleton structure having a high degree of similarity of a feature value from among the skeleton structures that are search targets and are stored in the database 110. The search unit 105 computes a degree of similarity between a feature value of the skeleton structure being the search query and a feature value (feature value of the skeleton structure detected from the analysis target image) of the skeleton structure being the search target, and extracts a skeleton structure having the computed degree of similarity higher than a predetermined threshold value. The feature value of the skeleton structure being the search query may use a feature value being computed in advance, or may use a feature value being acquired during a search. Note that, the search query may be input by moving each portion of a skeleton structure in response to an operation of the user, or a pose demonstrated by the user in front of a camera may be set as the search query.

In the present example embodiment, similarly to the classification methods, various search methods can be used by performing a search, based on a feature value of a skeleton structure of a person. Note that, a search method may be preset, or any search method may be able to be set by a user. For example, the search unit 105 performs a search by the following search methods. Any search method may be used, or any selected search method may be combined. A search may be performed by combining a plurality of search methods (search conditions) by a logical expression (for example, AND (conjunction), OR (disjunction), NOT (negation)). For example, a search may be performed by setting "(pose with a right hand up) AND (pose with a left foot up)" as a search condition.

<Search Method 1>

A search only by a feature value in the height direction

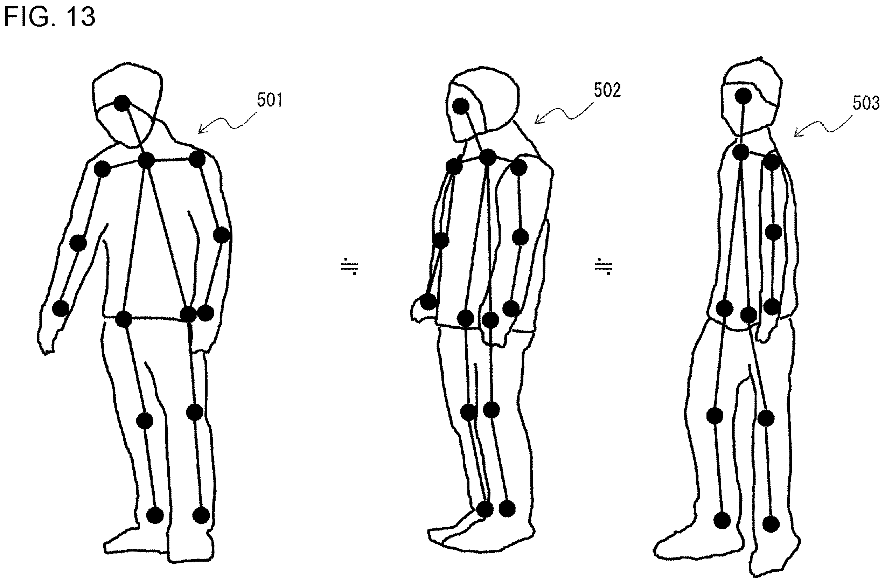

By performing a search by using only a feature value in the height direction of a person, an influence of a change in the horizontal direction of a person can be suppressed, and robustness improves with respect to a change in orientation of the person and body shape of the person. For example, as in skeleton structures 501 to 503 in Fig. 13, even when an orientation and a body shape of a person are different, a feature value in the height direction does not greatly change. Thus, in the skeleton structures 501 to 503, it can be decided that poses are the same at a time of a search (at a time of classification).

<Search Method 2>

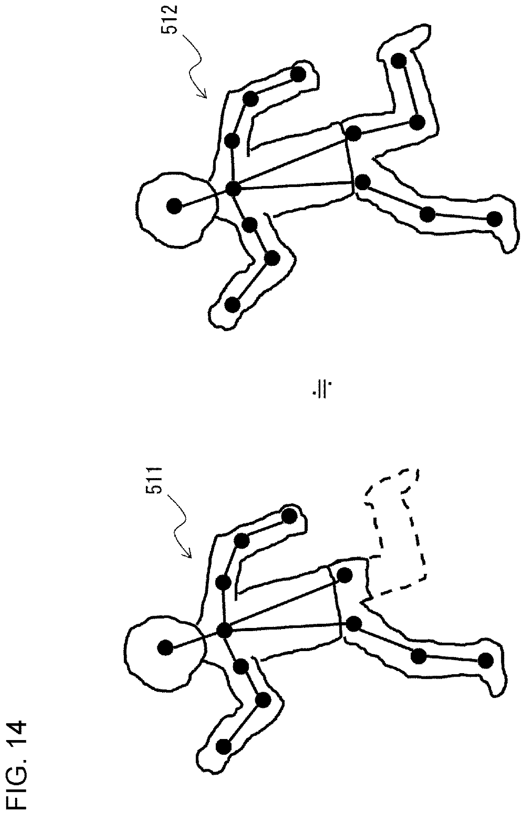

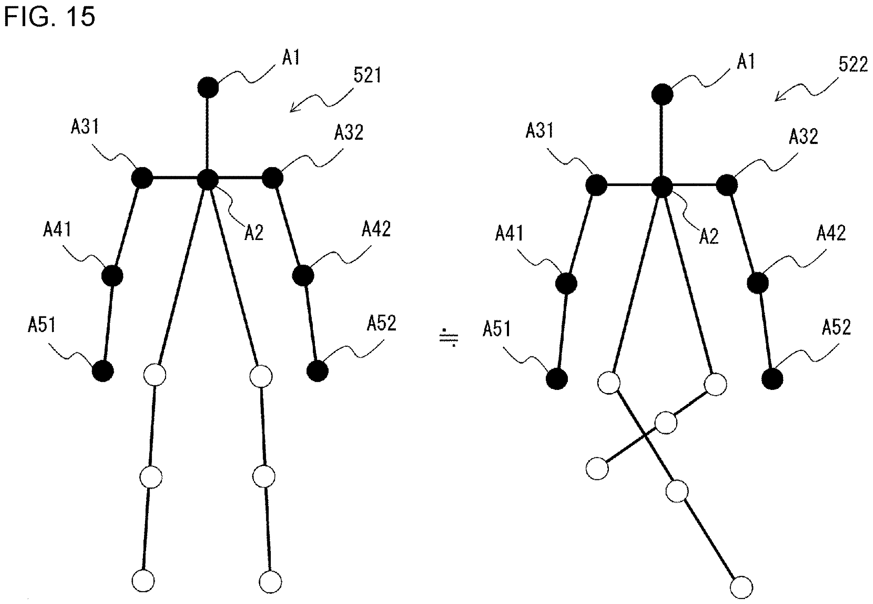

When a part of a body of a person is hidden in a partial search image, a search is performed by using only information about a recognizable portion. For example, as in skeleton structures 511 and 512 in Fig. 14, even when a keypoint of a left foot cannot be detected due to the left foot being hidden, a search can be performed by using a feature value of another detected keypoint. Thus, in the skeleton structures 511 and 512, it can be decided that poses are the same at a time of a search (at a time of classification). In other words, classification and a search can be performed by using a feature value of some of keypoints instead of all keypoints. In an example of skeleton structures 521 and 522 in Fig. 15, although orientations of both feet are different, it can be decided that poses are the same by setting a feature value of keypoints (A1, A2, A31, A32, A41, A42, A51, and A52) of an upper body as a search query. Further, a search may be performed by assigning a weight to a portion (feature point) desired to be searched, or a threshold value of a similarity degree determination may be changed. When a part of a body is hidden, a search may be performed by ignoring the hidden portion, or a search may be performed by taking the hidden portion into consideration. By performing a search also including a hidden portion, a pose in which the same portion is hidden can be searched.

<Search Method 3>

Search by ignoring the left and the right of a skeleton structure

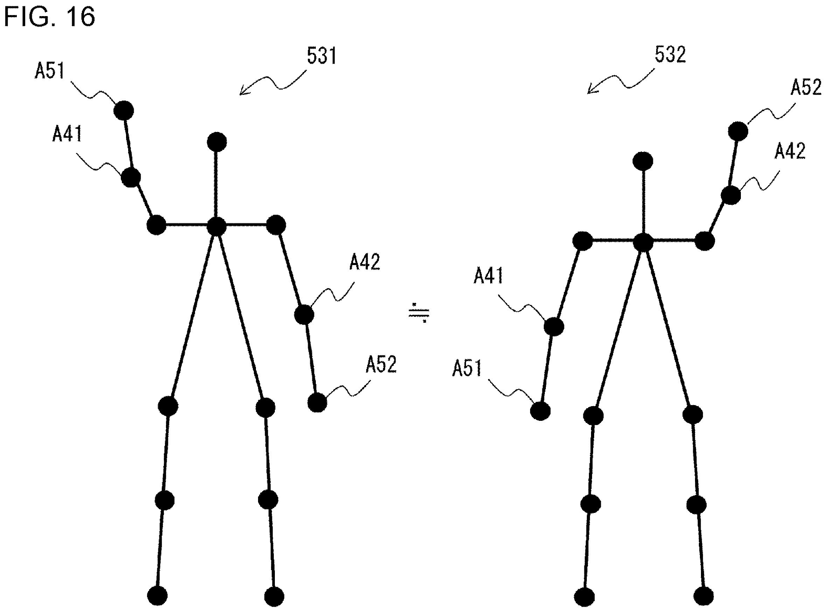

A search is performed on an assumption that reverse skeleton structures on a right side and a left side of a person are the same skeleton structure. For example, as in skeleton structures 531 and 532 in Fig. 16, a pose with a right hand up and a pose with a left hand up can be searched (classified) as the same pose. In the example in Fig. 16, in the skeleton structure 531 and the skeleton structure 532, although positions of the keypoint A51 of the right hand, the keypoint A41 of the right elbow, the keypoint A52 of the left hand, and the keypoint A42 of the left elbow are different, positions of the other keypoints are the same. When the keypoints of one of the skeleton structures of the keypoint A51 of the right hand and the keypoint A41 of the right elbow of the skeleton structure 531 and the keypoint A52 of the left hand and the keypoint A42 of the left elbow of the skeleton structure 532 are reversed, the keypoints have the same positions of the keypoints of the other skeleton structure, and, when the keypoints of one of the skeleton structures of the keypoint A52 of the left hand and the keypoint A42 of the left elbow of the skeleton structure 531 and the keypoint A51 of the right hand and the keypoint A41 of the right elbow of the skeleton structure 532 are reversed, the keypoints have the same positions of the keypoints of the other skeleton structure. Thus, it is decided that poses are the same.

<Search Method 4>

A search by a feature value in the vertical direction and the horizontal direction

After a search is performed only with a feature value of a person in the vertical direction (Y-axis direction), the acquired result is further searched by using a feature value of the person in the horizontal direction (X-axis direction).

<Search Method 5>

A search by a plurality of images along time series

A search is performed based on a feature value of a skeleton structure in a plurality of images successive in time series. For example, a search may be performed based on a cumulative value by accumulating a feature value in a time series direction. Furthermore, a search may be performed based on a change (change value) in a feature value of a skeleton structure in a plurality of successive images.

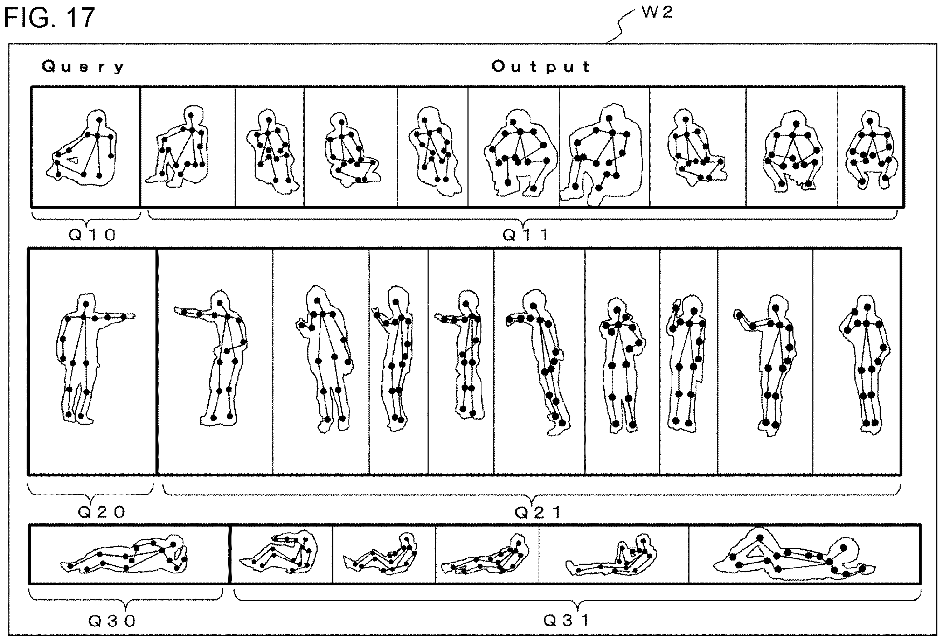

Furthermore, the search unit 105 displays a search result of the skeleton structure (S123). The search unit 105 acquires a necessary image of a skeleton structure and a person from the database 110, and displays, on the display unit 107, the skeleton structure and the person acquired as a search result. For example, when a plurality of search queries (search conditions) are specified, a search result is displayed for each of the search queries. Fig. 17 illustrates a display example when a search is performed by three search queries (poses). For example, as illustrated in Fig. 17, in a display window W2, skeleton structures and persons of search queries Q10, Q20, and Q30 specified at a left end portion are displayed, and skeleton structures and persons of search results Q11, Q21, and Q31 of the search queries are displayed side by side on the right side of the search queries Q10, Q20, and Q30.

An order in which search results are displayed side by side from a search query may be an order in which a corresponding skeleton structure is found, or may be decreasing order of a degree of similarity. When a search is performed by assigning a weight to a portion (feature point) in a partial search, display may be performed in an order of a degree of similarity computed by assigning a weight. Display may be performed in an order of a degree of similarity computed only from a portion (feature point) selected by a user. Further, display may be performed by cutting, for a certain period of time, images (frames) in time series before and after an image (frame) being a search result.

Herein, a modification example of the search processing described above will be described. The selection unit 109 selects at least one person included in a query image, based on a user input that specifies at least a partial region in the query image, and also selects a part of a body of the selected person, based on the user input that specifies at least the partial region in the query image. Then, the search unit 105 searches for an analysis target image including a person in a state similar to a state of the selected person by setting a weight of the selected part of the body to be greater than that of another portion.

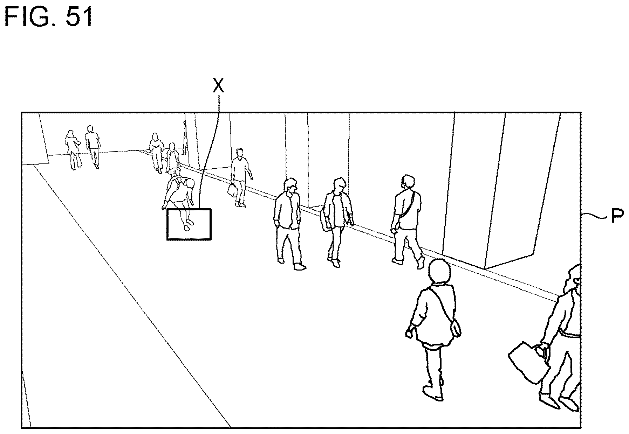

For example, the selection unit 109 may receive a user input that specifies a part of a body by a user input that surrounds a partial region of a query image by a frame X as illustrated in Fig. 51. A position and a size of the frame X in the image can be freely specified by a user. Further, for example, the search unit 105 may search for an analysis target image including a person in a state similar to a state of a selected person by setting a weight of a keypoint (feature point) included in the selected part of the body to be greater than that of another keypoint (feature point).

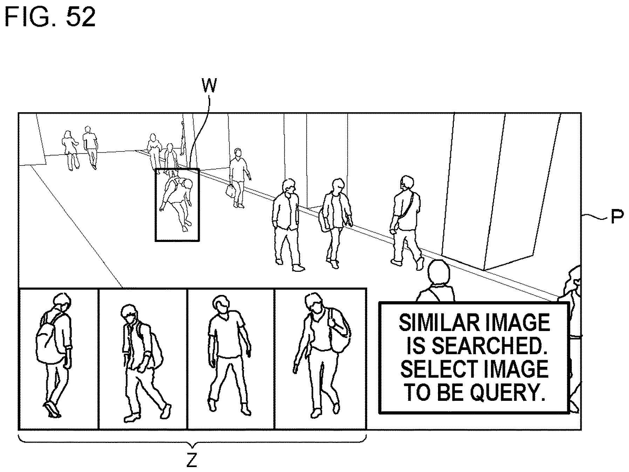

Herein, another modification example of the search processing described above will be described. The image processing apparatus 100 searches, from query-specific images being prepared, for an image including a person having a feature value of a two-dimensional skeleton structure similar to that of a person selected by the selection unit 109. Then, as illustrated in Fig. 52, the image processing apparatus 100 displays a search result Z, and receives a user input that specifies a query image from the search result Z. In this case, the search unit 105 searches for a predetermined analysis target image with, as a search query, the feature value of the two-dimensional skeleton structure of the person included in the query image specified from the search result as illustrated in Fig. 52.

As described above, in the present example embodiment, a skeleton structure of a person can be detected from a two-dimensional image, and classification and a search can be performed based on a feature value of the detected skeleton structure. In this way, classification can be performed for each similar pose having a high degree of similarity, and a similar pose having a high degree of similarity to a search query (search key) can be searched. By classifying similar poses from an image and displaying the similar poses, a user can recognize a pose of a person in the image without specifying a pose and the like. Since the user can specify a pose being a search query from a classification result, a desired pose can be searched even when a pose desired to be searched by a user is not recognized in detail in advance. For example, since classification and a search can be performed with a whole or a part of a skeleton structure of a person and the like as a condition, flexible classification and a flexible search can be performed.

Further, in a case of the present example embodiment, a query image including a person in a state desired to be searched needs to be provided to the image processing apparatus 100. When an image including only a person in a state desired to be searched is found, there is no particular problem, but only an image including a person in an unrelated state may be found in addition to a person in a state desired to be searched. In a case where such a query image is provided to the image processing apparatus 100, when a search is performed with, as search queries, states of all of a plurality of persons included in the query image, not only an image including a person in a desired state but also an image including a person in an unrelated state may be included in a search result. For this problem, in the search processing, the image processing apparatus 100 selects at least one person included in a query image, based on a user input, and searches, from analysis target images, for an analysis target image including a person in a state similar to a state of the selected person. Such an image processing apparatus 100 can perform a search with only a desired state of a person as a search query even when an image including a person in an unrelated state in addition to a person in a state desired to be searched is a query image. As a result, inconvenience that an image different from a search target is included in a search result can be suppressed.

Further, the image processing apparatus 100 according to the present example embodiment can receive a user input that specifies at least a partial region in a query image, and select a person detected in the specified partial region. With such an image processing apparatus 100, a user can easily recognize which person is to be selected by his/her own input.

Further, after the image processing apparatus 100 according to the present example embodiment performs the processing of detecting a person from a query image, the image processing apparatus 100 can display, on the query image, a processed image in which a person detected in the query image is displayed as a selectable person in an identifiable manner, and can receive a user input that selects at least one person from the selectable person. With such an image processing apparatus 100, a user can easily recognize which person is to be selected by his/her own input. Further, the user may only select a desired choice from a plurality of choices, and thus a user input is further facilitated.

Further, the image processing apparatus 100 according to the present example embodiment can display, as a selectable person on the processed image described above, a person having a region (that represents a size of a person in an image) occupying an image equal to or more than a reference value and a person whose detection result of a two-dimensional skeleton structure by the skeleton structure detection unit 102 satisfies a predetermined condition, among detected persons. As a result, only a person in which detection of a two-dimensional skeleton structure and a computation of a feature value can be accurately performed can be set as a selectable person, and an improvement in quality of a search query and an improvement in accuracy of a search result are achieved.

Further, the image processing apparatus 100 according to the present example embodiment can select a part of a body of a person, based on a user input that specifies the part of the body of the person on a query image, and can search for an analysis target image including a person in a state similar to a state of the selected person by setting a weight of the selected part of the body to be greater than that of another portion. With such an image processing apparatus 100, a user can easily recognize which part of a body is to be selected by his/her own input.

Further, the image processing apparatus 100 according to the present example embodiment can determine the number of persons included in a query image. Then, the image processing apparatus 100 can select, when the determined number of persons is plural, at least one person from the plurality of persons included in the image, based on a user input, and the image processing apparatus 100 can select, when the determined number of persons is one, the one person. Such an image processing apparatus 100 can limit execution of the processing of selecting at least one person from a query image, based on a user input, to a case where persons included in the query image are plural. As a result, a reduction in processing load on a computer and a reduction in user load by a reduction in user input are achieved.

(Example Embodiment 2)

An example embodiment 2 will be described below with reference to the drawings. In the present example embodiment, a specific example of the feature value computation in the example embodiment 1 will be described. In the present example embodiment, a feature value is acquired by normalization by using a height of a person. The other points are similar to those in the example embodiment 1.

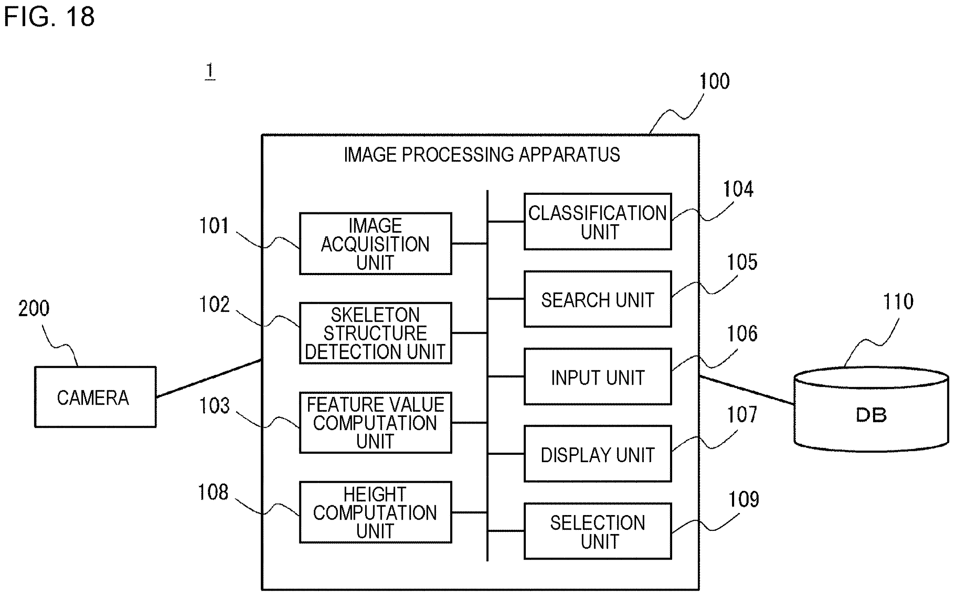

Fig. 18 illustrates a configuration of an image processing apparatus 100 according to the present example embodiment. As illustrated in Fig. 18, the image processing apparatus 100 further includes a height computation unit 108 in addition to the configuration in the example embodiment 1. Note that, a feature value computation unit 103 and the height computation unit 108 may serve as one processing unit.

The height computation unit (height estimation unit) 108 computes (estimates) a standing height (referred to as a height pixel number) of a person in a two-dimensional image, based on a two-dimensional skeleton structure detected by a skeleton structure detection unit 102. It can be said that the height pixel number is a height of a person in a two-dimensional image (a length of a whole body of a person on a two-dimensional image space). The height computation unit 108 acquires a height pixel number (pixel number) from a length (length on the two-dimensional image space) of each bone of a detected skeleton structure.

In the following examples, specific examples 1 to 3 are used as a method for acquiring a height pixel number. Note that, any method of the specific examples 1 to 3 may be used, or a plurality of any selected methods may be combined and used. In the specific example 1, a height pixel number is acquired by adding up lengths of bones from a head to a foot among bones of a skeleton structure. When the skeleton structure detection unit 102 (skeleton estimation technique) does not output a top of a head and a foot, a correction can be performed by multiplication by a constant as necessary. In the specific example 2, a height pixel number is computed by using a human model indicating a relationship between a length of each bone and a length of a whole body (a height on the two-dimensional image space). In the specific example 3, a height pixel number is computed by fitting (applying) a three-dimensional human model to a two-dimensional skeleton structure.

The feature value computation unit 103 according to the present example embodiment is a normalization unit that normalizes a skeleton structure (skeleton information) of a person, based on a computed height pixel number of the person. The feature value computation unit 103 stores a feature value (normalization value) of the normalized skeleton structure in a database 110. The feature value computation unit 103 normalizes, by the height pixel number, a height on an image of each keypoint (feature point) included in the skeleton structure. In the present example embodiment, for example, a height direction is an up-down direction (Y-axis direction) in a two-dimensional coordinate (X-Y coordinate) space of an image. In this case, a height of a keypoint can be acquired from a value (pixel number) of a Y coordinate of the keypoint. Alternatively, a height direction may be a direction (vertical projection direction) of a vertical projection axis in which a direction of a vertical axis perpendicular to the ground (reference surface) in a three-dimensional coordinate space in a real world is projected in the two-dimensional coordinate space. In this case, a height of a keypoint can be acquired by acquiring a vertical projection axis in which an axis perpendicular to the ground in the real world is projected in the two-dimensional coordinate space, based on a camera parameter, and being acquired from a value (pixel number) along the vertical projection axis. Note that, the camera parameter is a capturing parameter of an image, and, for example, the camera parameter is a pose, a position, a capturing angle, a focal distance, and the like of a camera 200. The camera 200 captures an image of an object whose length and position are clear in advance, and a camera parameter can be acquired from the image. A strain may occur at both ends of the captured image, and the vertical direction in the real world and the up-down direction in the image may not match. In contrast, an extent that the vertical direction in the real world is tilted in an image is clear by using a parameter of a camera that captures the image. Thus, a feature value of a keypoint can be acquired in consideration of a difference between the real world and the image by normalizing, by a height, a value of the keypoint along a vertical projection axis projected in the image, based on the camera parameter. Note that, a left-right direction (a horizontal direction) is a direction (X-axis direction) of left and right in a two-dimensional coordinate (X-Y coordinate) space of an image, or is a direction in which a direction parallel to the ground in the three-dimensional coordinate space in the real world is projected in the two-dimensional coordinate space.

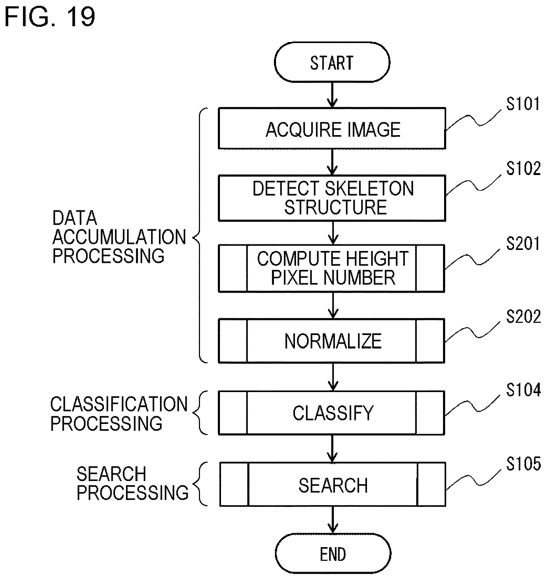

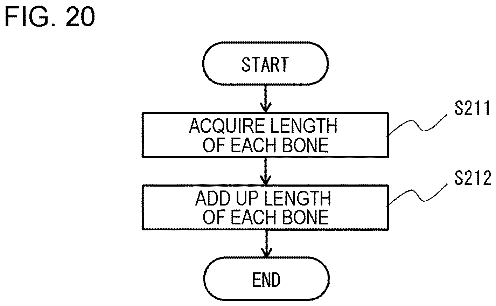

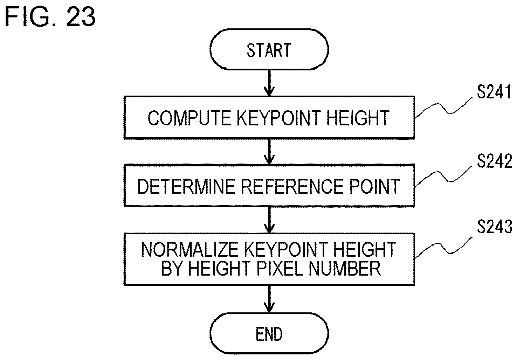

Figs. 19 to 23 each illustrate a flow of processing of the image processing apparatus 100 according to the present example embodiment. Fig. 19 illustrates a flow from image acquisition to search processing in the image processing apparatus 100, Figs. 20 to 22 illustrate flows of specific examples 1 to 3 of height pixel number computation processing (S201) in Fig. 19, and Fig. 23 illustrates a flow of normalization processing (S202) in Fig. 19.

As illustrated in Fig. 19, in the present example embodiment, the height pixel number computation processing (S201) and the normalization processing (S202) are performed as the feature value computation processing (S103) in the example embodiment 1. The other points are similar to those in the example embodiment 1.

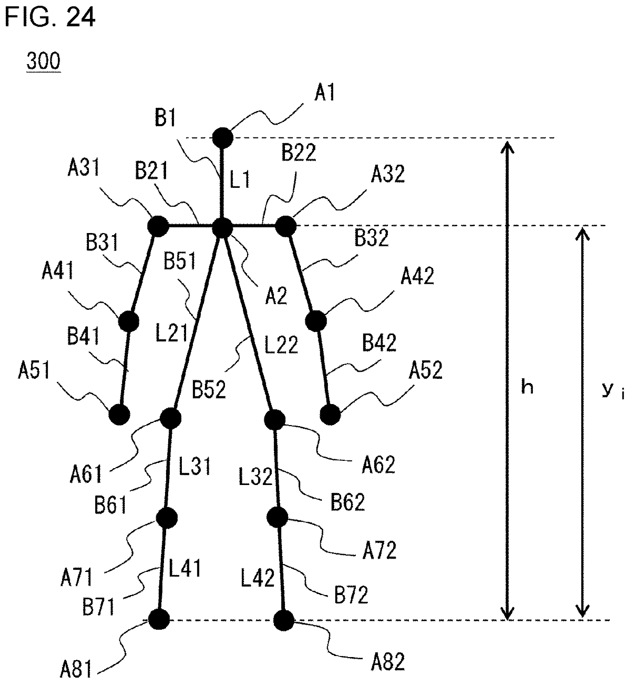

The image processing apparatus 100 performs the height pixel number computation processing (S201), based on a detected skeleton structure, after the image acquisition (S101) and skeleton structure detection (S102). In this example, as illustrated in Fig. 24, a height of a skeleton structure of an upright person in an image is a height pixel number (h), and a height of each keypoint of the skeleton structure in a state of the person in the image is a keypoint height (yi). Hereinafter, the specific examples 1 to 3 of the height pixel number computation processing will be described.

<Specific Example 1>

In the specific example 1, a height pixel number is acquired by using a length of a bone from a head to a foot. In the specific example 1, as illustrated in Fig. 20, the height computation unit 108 acquires a length of each bone (S211), and adds up the acquired length of each bone (S212).

The height computation unit 108 acquires a length of a bone from a head to a foot of a person on a two-dimensional image, and acquires a height pixel number. In other words, each length (pixel number) of a bone B1 (length L1), a bone B51 (length L21), a bone B61 (length L31), and a bone B71 (length L41), or the bone B1 (length L1), a bone B52 (length L22), a bone B62 (length L32), and a bone B72 (length L42) among bones in Fig. 24 is acquired from the image in which the skeleton structure is detected. A length of each bone can be acquired from coordinates of each keypoint in the two-dimensional image. A value acquired by multiplying, by a correction constant, L1 + L21 + L31 + L41 or L1 + L22 + L32 + L42 acquired by adding them up is computed as the height pixel number (h). When both values can be computed, a longer value is set as the height pixel number, for example. In other words, each bone has a longest length in an image when being captured from the front, and is displayed to be short when being tilted in a depth direction with respect to a camera. Therefore, it is conceivable that a longer bone has a higher possibility of being captured from the front, and has a value closer to a true value. Thus, a longer value is preferably selected.

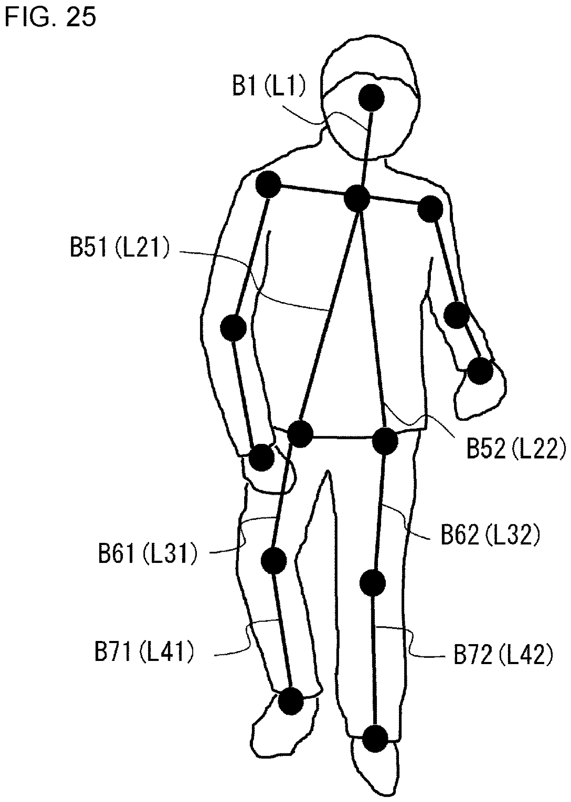

In an example in Fig. 25, the bone B1, the bone B51 and the bone B52, the bone B61 and the bone B62, and the bone B71 and the bone B72 are each detected without overlapping. L1 + L21 + L31 + L41 and L1 + L22 + L32 + L42 that are a total of the bones are acquired, and, for example, a value acquired by multiplying, by a correction constant, L1 + L22 + L32 + L42 on a left leg side having a greater length of the detected bones is set as the height pixel number.

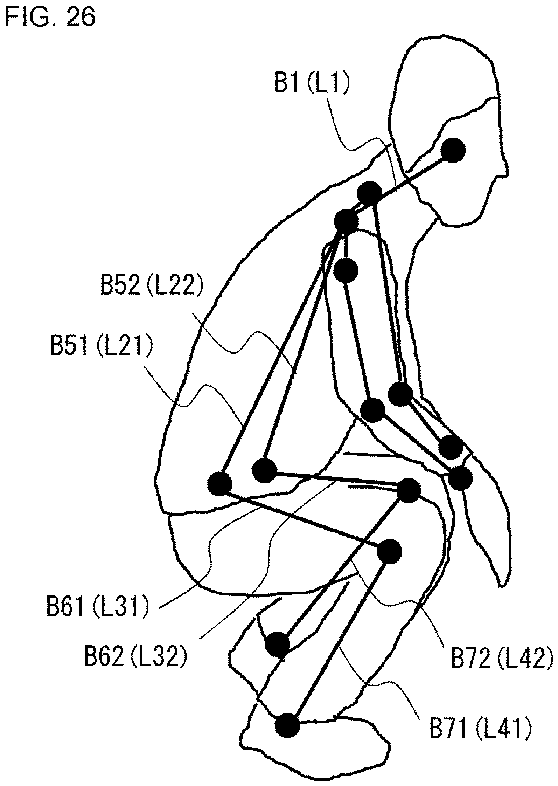

In an example in Fig. 26, the bone B1, the bone B51 and the bone B52, the bone B61 and the bone B62, and the bone B71 and the bone B72 are each detected, and the bone B61 and the bone B71 of a right leg and the bone B62 and the bone B72 of a left leg overlap. L1 + L21 + L31 + L41 and L1 + L22 + L32 + L42 that are a total of the bones are acquired, and, for example, a value acquired by multiplying, by a correction constant, L1 + L21 + L31 + L41 on a right leg side having a greater length of the detected bones is set as the height pixel number.

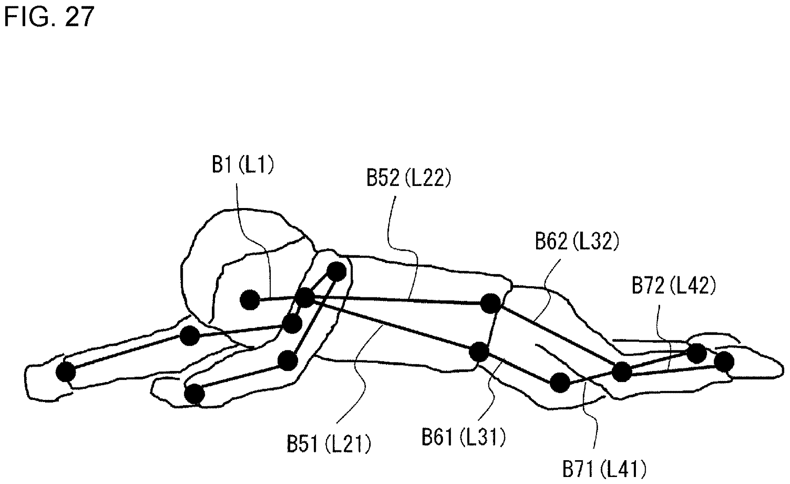

In an example in Fig. 27, the bone B1, the bone B51 and the bone B52, the bone B61 and the bone B62, and the bone B71 and the bone B72 are each detected, and the bone B61 and the bone B71 of the right leg and the bone B62 and the bone B72 of the left leg overlap. L1 + L21 + L31 + L41 and L1 + L22 + L32 + L42 that are a total of the bones are acquired, and, for example, a value acquired by multiplying, by a correction constant, L1 + L22 + L32 + L42 on the left leg side having a greater length of the detected bones is set as the height pixel number.

In the specific example 1, since a height can be acquired by adding up lengths of bones from a head to a foot, a height pixel number can be acquired by a simple method. Further, since at least a skeleton from a head to a foot may be able to be detected by a skeleton estimation technique using machine learning, a height pixel number can be accurately estimated even when the entire person is not necessarily captured in an image as in a squatting state and the like.

<Specific Example 2>

In the specific example 2, a height pixel number is acquired by using a two-dimensional skeleton model indicating a relationship between a length of a bone included in a two-dimensional skeleton structure and a length of a whole body of a person on a two-dimensional image space.

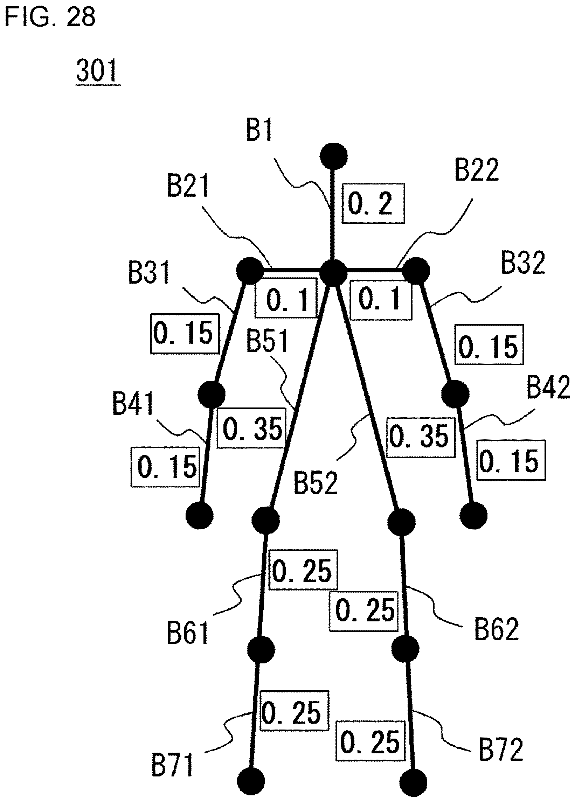

Fig. 28 is a human model (two-dimensional skeleton model) 301 that is used in the specific example 2 and indicates a relationship between a length of each bone on the two-dimensional image space and a length of a whole body on the two-dimensional image space. As illustrated in Fig. 28, a relationship between a length of each bone of an average person and a length of a whole body (a proportion of a length of each bone to a length of a whole body) is associated with each bone of the human model 301. For example, a length of the bone B1 of a head is the length of the whole body × 0.2 (20%), a length of the bone B41 of a right hand is the length of the whole body × 0.15 (15%), and a length of the bone B71 of the right leg is the length of the whole body × 0.25 (25%). Information about such a human model 301 is stored in the database 110, and thus an average length of a whole body can be acquired from a length of each bone. In addition to a human model of an average person, a human model may be prepared for each attribute of a person such as age, gender, and nationality. In this way, a length (height) of a whole body can be appropriately acquired according to an attribute of a person.

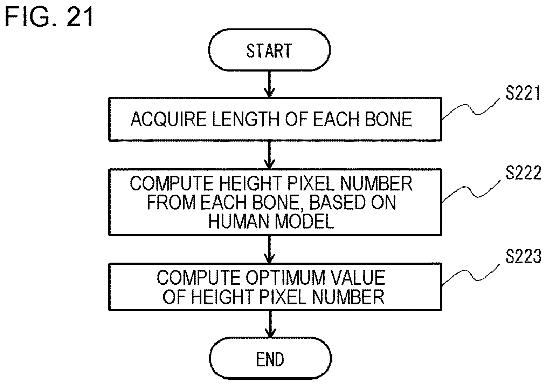

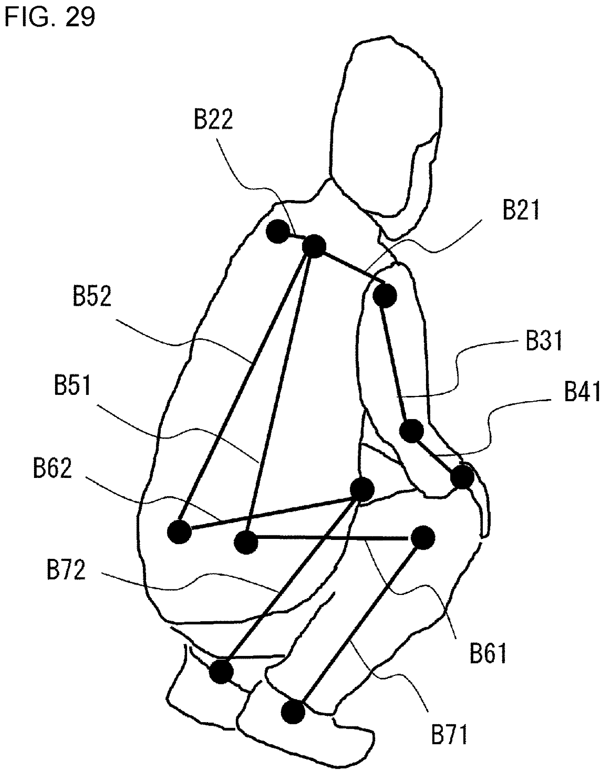

In the specific example 2, as illustrated in Fig. 21, the height computation unit 108 acquires a length of each bone (S221). The height computation unit 108 acquires a length of all bones (length on the two-dimensional image space) in a detected skeleton structure. Fig. 29 is an example of capturing a person in a squatting state diagonally from rear right and detecting a skeleton structure. In this example, since a face and a left side surface of a person are not captured, a bone of a head and bones of a left arm and a left hand cannot be detected. Thus, each length of bones B21, B22, B31, B41, B51, B52, B61, B62, B71, and B72 that are detected is acquired.

Subsequently, as illustrated in Fig. 21, the height computation unit 108 computes a height pixel number from a length of each bone, based on a human model (S222). The height computation unit 108 refers to the human model 301 indicating a relationship between lengths of each bone and a whole body as in Fig. 28, and acquires a height pixel number from the length of each bone. For example, since a length of the bone B41 of the right hand is the length of the whole body × 0.15, a height pixel number based on the bone B41 is acquired from the length of the bone B41/0.15. Further, since a length of the bone B71 of the right leg is the length of the whole body × 0.25, a height pixel number based on the bone B71 is acquired from the length of the bone B71/0.25.

The human model referred at this time is, for example, a human model of an average person, but a human model may be selected according to an attribute of a person such as age, gender, and nationality. For example, when a face of a person is captured in a captured image, an attribute of the person is identified based on the face, and a human model associated with the identified attribute is referred. An attribute of a person can be recognized from a feature of a face in an image by referring to information acquired by performing machine learning on a face for each attribute. Further, when an attribute of a person cannot be identified from an image, a human model of an average person may be used.

Further, a height pixel number computed from a length of a bone may be corrected by a camera parameter. For example, when a camera is placed in a high position and performs capturing in such a way that a person is looked down, a horizontal length such as a bone of a width of shoulders is not affected by a dip of the camera in a two-dimensional skeleton structure, but a vertical length such as a bone from a neck to a waist is reduced as a dip of the camera increases. Then, a height pixel number computed from the horizontal length such as a bone of a width of shoulders tends to be greater than an actual height pixel number. Thus, when a camera parameter is used, an angle at which a person is looked down by the camera is clear, and thus a correction can be performed in such a way as to acquire a two-dimensional skeleton structure captured from the front by using information about the dip. In this way, a height pixel number can be more accurately computed.

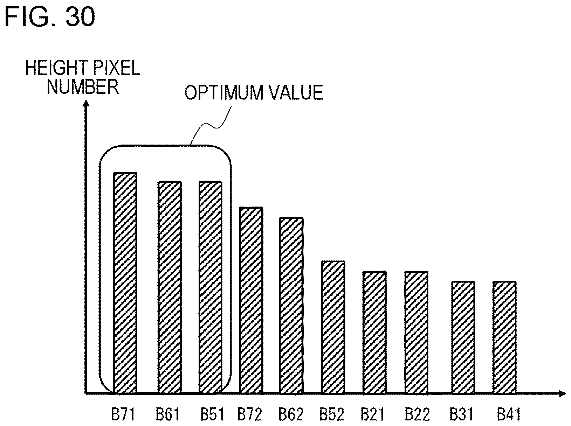

Subsequently, as illustrated in Fig. 21, the height computation unit 108 computes an optimum value of the height pixel number (S223). The height computation unit 108 computes an optimum value of the height pixel number from the height pixel number acquired for each bone. For example, a histogram of a height pixel number acquired for each bone as illustrated in Fig. 30 is generated, and a great height pixel number is selected from among the height pixel numbers. In other words, a longer height pixel number is selected from among a plurality of height pixel numbers acquired based on a plurality of bones. For example, top 30% is a valid value, and height pixel numbers by the bones B71, B61, and B51 are selected in Fig. 30. An average of the selected height pixel numbers may be acquired as an optimum value, or a greatest height pixel number may be set as an optimum value. Since a height is acquired from a length of a bone in a two-dimensional image, when the bone cannot be captured from the front, i.e., when the bone tilted in the depth direction as viewed from the camera is captured, a length of the bone is shorter than that captured from the front. Then, a value having a greater height pixel number has a higher possibility of being captured from the front than a value having a smaller height pixel number and is a more plausible value, and thus a greater value is set as an optimum value.

In the specific example 2, since a height pixel number is acquired based on a bone of a detected skeleton structure by using a human model indicating a relationship between lengths of a bone and a whole body on the two-dimensional image space, a height pixel number can be acquired from some of bones even when all skeletons from a head to a foot cannot be acquired. Particularly, a height pixel number can be accurately estimated by adopting a greater value among values acquired from a plurality of bones.

<Specific Example 3>

In the specific example 3, a skeleton vector of a whole body is acquired by fitting a two-dimensional skeleton structure to a three-dimensional human model (three-dimensional skeleton model) and using a height pixel number of the fit three-dimensional human model.

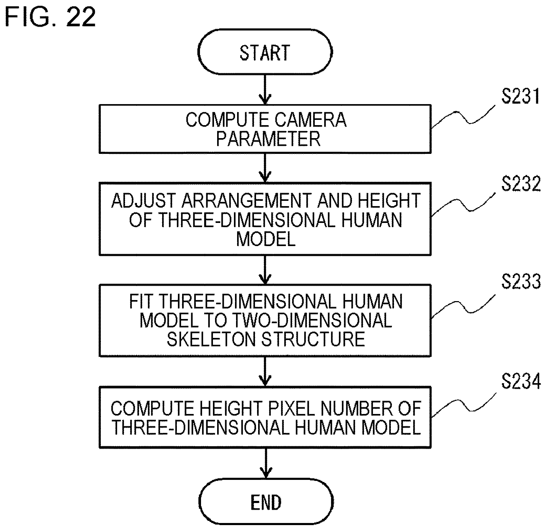

In the specific example 3, as illustrated in Fig. 22, the height computation unit 108 first computes a camera parameter, based on an image captured by the camera 200 (S231). The height computation unit 108 extracts an object whose length is clear in advance from a plurality of images captured by the camera 200, and acquires a camera parameter from a size (pixel number) of the extracted object. Note that, a camera parameter may be acquired in advance, and the acquired camera parameter may be acquired as necessary.

Subsequently, the height computation unit 108 adjusts an arrangement and a height of a three-dimensional human model (S232). The height computation unit 108 prepares, for a detected two-dimensional skeleton structure, the three-dimensional human model for a height pixel number computation, and arranges the three-dimensional human model in the same two-dimensional image, based on the camera parameter. Specifically, a "relative positional relationship between a camera and a person in a real world" is determined from the camera parameter and the two-dimensional skeleton structure. For example, if a position of the camera has coordinates (0, 0, 0), coordinates (x, y, z) of a position in which a person stands (or sits) are determined. Then, by assuming an image captured when the three-dimensional human model is arranged in the same position (x, y, z) as that of the determined person, the two-dimensional skeleton structure and the three-dimensional human model are superimposed.

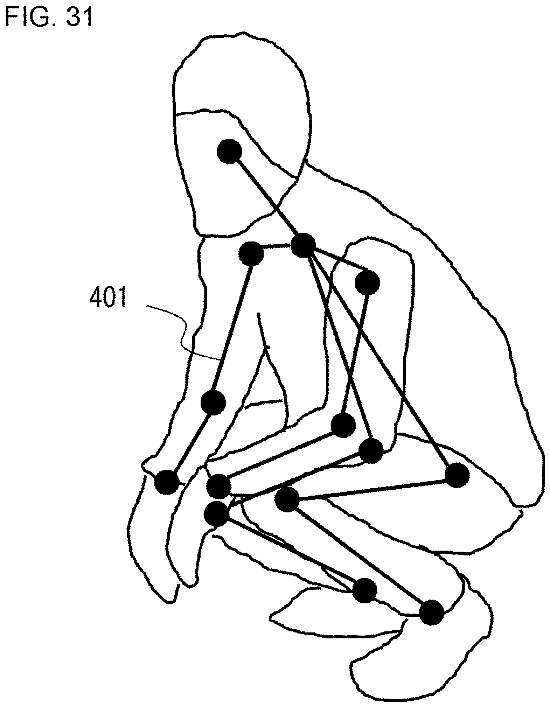

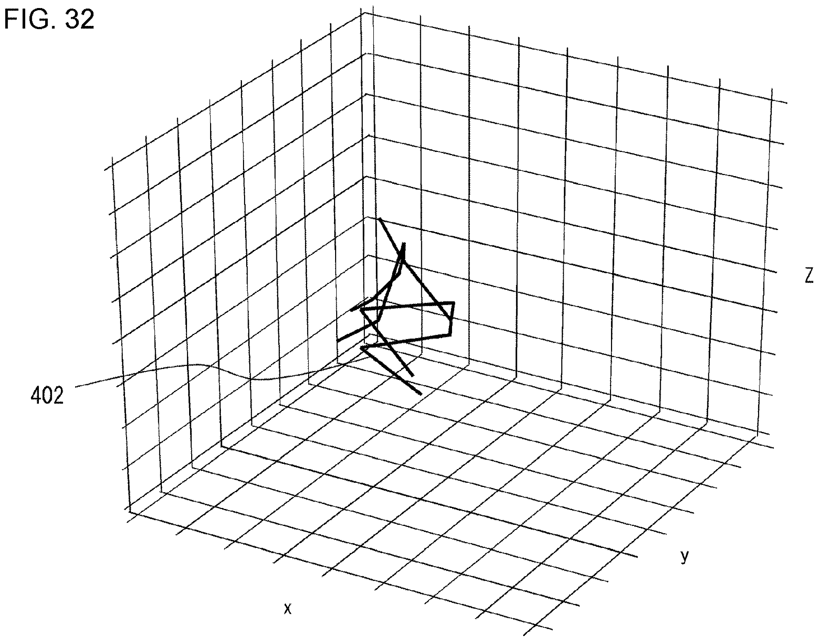

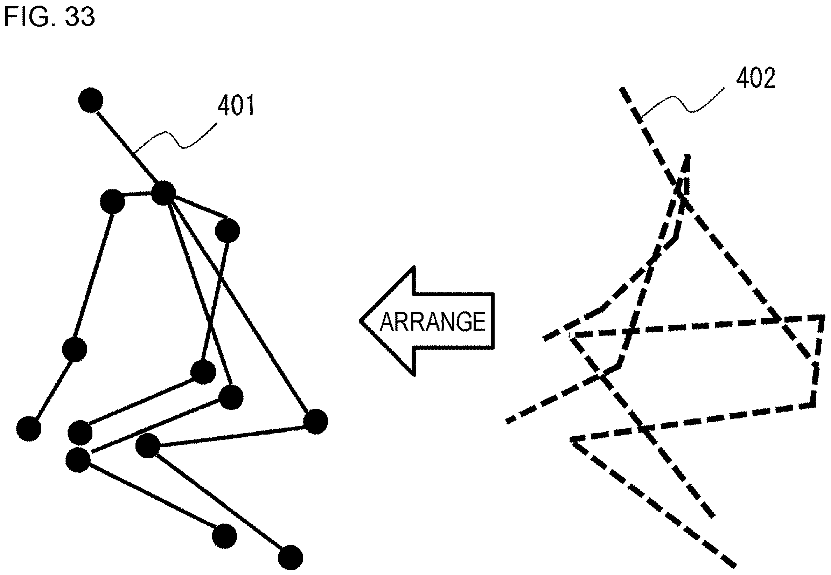

Fig. 31 is an example of capturing a squatting person diagonally from front left and detecting a two-dimensional skeleton structure 401. The two-dimensional skeleton structure 401 includes two-dimensional coordinate information. Note that, all bones are preferably detected, but some of bones may not be detected. A three-dimensional human model 402 as in Fig. 32 is prepared for the two-dimensional skeleton structure 401. The three-dimensional human model (three-dimensional skeleton model) 402 is a model of a skeleton including three-dimensional coordinate information and having the same shape as that of the two-dimensional skeleton structure 401. Then, as in Fig. 33, the prepared three-dimensional human model 402 is arranged and superimposed on the detected two-dimensional skeleton structure 401.

Further, the three-dimensional human model 402 is superimposed on the two-dimensional skeleton structure 401, and a height of the three-dimensional human model 402 is also adjusted to the two-dimensional skeleton structure 401.

Note that, the three-dimensional human model 402 prepared at this time may be a model in a state close to a pose of the two-dimensional skeleton structure 401 as in Fig. 33, or may be a model in an upright state. For example, the three-dimensional human model 402 with an estimated pose may be generated by using a technique for estimating a pose in a three-dimensional space from a two-dimensional image by using machine learning. A three-dimensional pose can be estimated from a two-dimensional image by learning information about a joint in the two-dimensional image and information about a joint in a three-dimensional space.

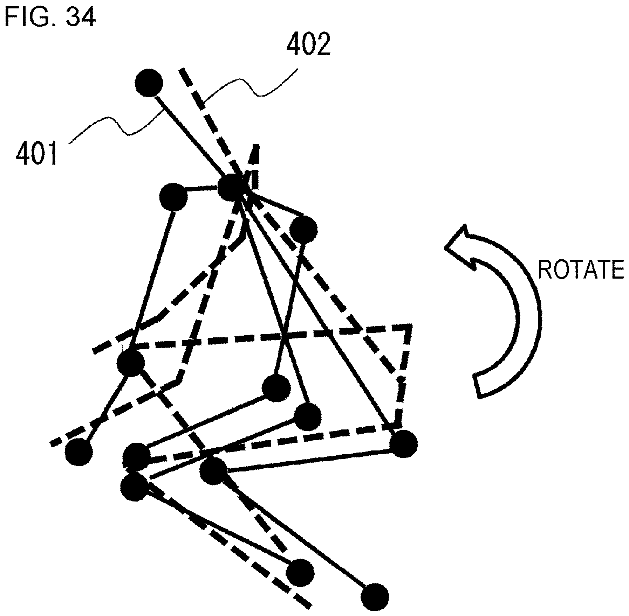

Subsequently, as illustrated in Fig. 22, the height computation unit 108 fits the three-dimensional human model to a two-dimensional skeleton structure (S233). As in Fig. 34, the height computation unit 108 deforms the three-dimensional human model 402 in such a way that poses of the three-dimensional human model 402 and the two-dimensional skeleton structure 401 match in a state where the three-dimensional human model 402 is superimposed on the two-dimensional skeleton structure 401. In other words, a height, an orientation of a body, and an angle of a joint of the three-dimensional human model 402 are adjusted, and optimization is performed in such a way as to eliminate a difference from the two-dimensional skeleton structure 401. For example, by rotating a joint of the three-dimensional human model 402 in a movable range of a person and also rotating the entire three-dimensional human model 402, the entire size is adjusted. Note that, fitting (application) between a three-dimensional human model and a two-dimensional skeleton structure is performed on a two-dimensional space (two-dimensional coordinates). In other words, a three-dimensional human model is mapped to the two-dimensional space, and the three-dimensional human model is optimized for a two-dimensional skeleton structure in consideration of a change of the deformed three-dimensional human model in the two-dimensional space (image).

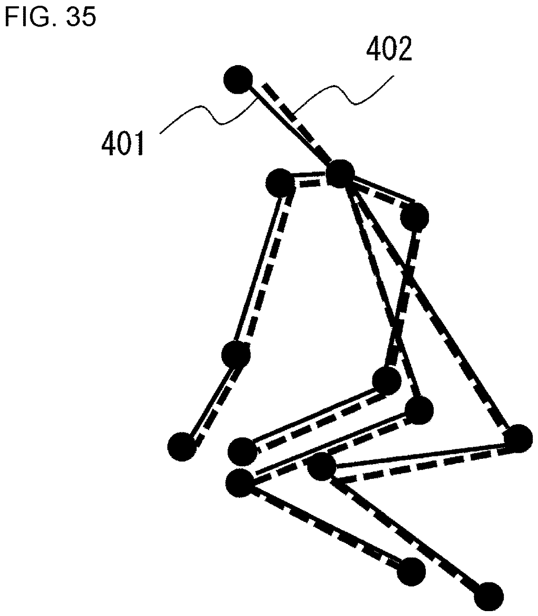

Subsequently, as illustrated in Fig. 22, the height computation unit 108 computes a height pixel number of the fit three-dimensional human model (S234). As in Fig. 35, when there is no difference between the three-dimensional human model 402 and the two-dimensional skeleton structure 401 and poses match, the height computation unit 108 acquires a height pixel number of the three-dimensional human model 402 in that state. With the optimized three-dimensional human model 402 in an upright state, a length of a whole body on the two-dimensional space is acquired based on a camera parameter. For example, a height pixel number is computed from lengths (pixel numbers) of bones from a head to a foot when the three-dimensional human model 402 is upright. Similarly to the specific example 1, the lengths of the bones from the head to the foot of the three-dimensional human model 402 may be added up.

In the specific example 3, a height pixel number is acquired based on a three-dimensional human model by fitting the three-dimensional human model to a two-dimensional skeleton structure, based on a camera parameter, and thus the height pixel number can be accurately estimated even when all bones are not captured at the front, i.e., when an error is great due to all bones being captured on a slant.

<Normalization Processing>

As illustrated in Fig. 19, the image processing apparatus 100 performs the normalization processing (S202) subsequent to the height pixel number computation processing. In the normalization processing, as illustrated in Fig. 23, the feature value computation unit 103 computes a keypoint height (S241). The feature value computation unit 103 computes a keypoint height (pixel number) of all keypoints included in the detected skeleton structure. The keypoint height is a length (pixel number) in the height direction from a lowest end (for example, a keypoint of any foot) of the skeleton structure to the keypoint. Herein, as one example, the keypoint height is acquired from a Y coordinate of the keypoint in an image. Note that, as described above, the keypoint height may be acquired from a length in a direction along a vertical projection axis based on a camera parameter. For example, in the example in Fig. 24, a height (yi) of a keypoint A2 of a neck is a value acquired by subtracting a Y coordinate of a keypoint A81 of a right foot or a keypoint A82 of a left foot from a Y coordinate of the keypoint A2.

Subsequently, the feature value computation unit 103 determines a reference point for normalization (S242). The reference point is a point being a reference for representing a relative height of a keypoint. The reference point may be preset, or may be able to be selected by a user. The reference point is preferably at the center of the skeleton structure or higher than the center (in an upper half of an image in the up-down direction), and, for example, coordinates of a keypoint of a neck are set as the reference point. Note that, coordinates of a keypoint of a head or another portion instead of a neck may be set as the reference point. Instead of a keypoint, any coordinates (for example, center coordinates in the skeleton structure, and the like) may be set as the reference point.

Subsequently, the feature value computation unit 103 normalizes the keypoint height (yi) by the height pixel number (S243). The feature value computation unit 103 normalizes each keypoint by using the keypoint height of each keypoint, the reference point, and the height pixel number. Specifically, the feature value computation unit 103 normalizes, by the height pixel number, a relative height of a keypoint with respect to the reference point. Herein, as an example focusing only on the height direction, only a Y coordinate is extracted, and normalization is performed with the reference point as the keypoint of the neck. Specifically, with a Y coordinate of the reference point (keypoint of the neck) as $(y_c)$, a feature value (normalization value) is acquired by using the following equation (1). Note that, when a vertical projection axis based on a camera parameter is used, $(y_i)$ and $(y_c)$ are converted into values in a direction along the vertical projection axis.

[Mathematical 1]

$$f_i = (y_i - y_c) / h \quad \cdots (1)$$

For example, when the number of keypoints is 18, 18 coordinates $(x_0, y_0)$, $(x_1, y_1)$, ...and $(x_{17}, y_{17})$ of the keypoints are converted into 18-dimensional feature values as follows by using the equation (1) described above.

[Mathematical 2]

$$f_0 = (y_0 - y_c) / h$$
$$f_1 = (y_1 - y_c) / h$$
$$\vdots \qquad \cdots (2)$$
$$f_{17} = (y_{17} - y_c) / h$$

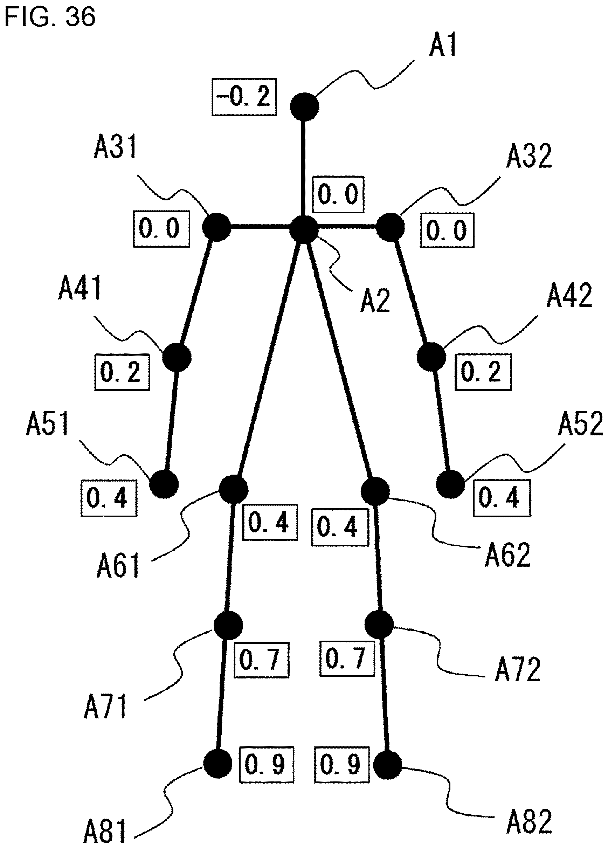

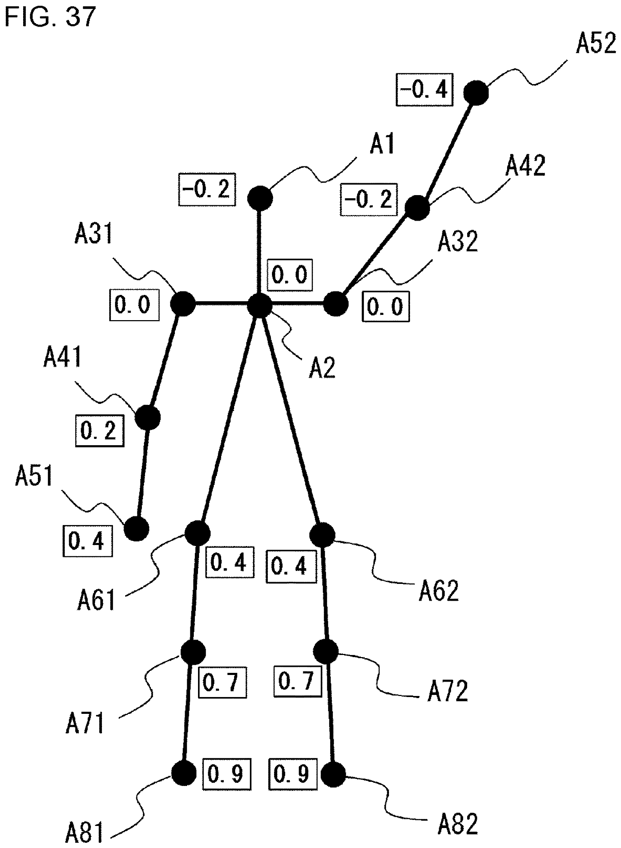

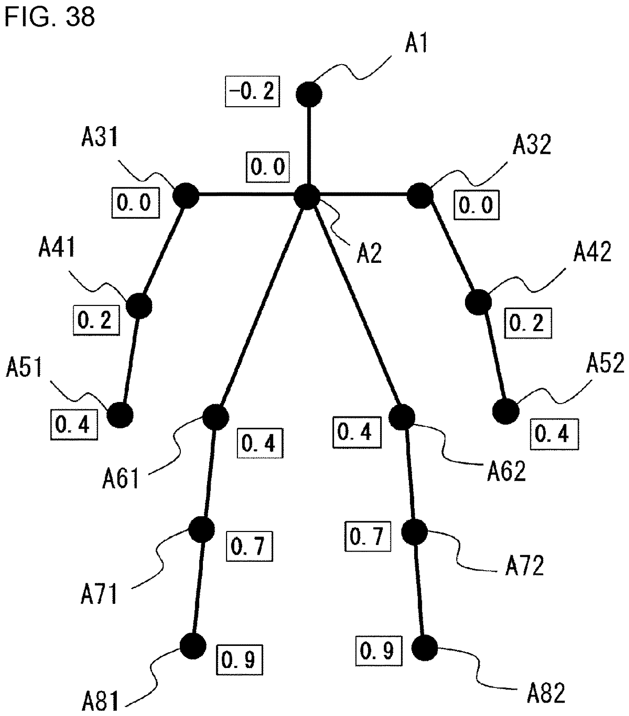

Fig. 36 illustrates an example of a feature value of each keypoint acquired by the feature value computation unit 103. In this example, since the keypoint A2 of the neck is the reference point, a feature value of the keypoint A2 is 0.0 and a feature value of a keypoint A31 of a right shoulder and a keypoint A32 of a left shoulder at the same height as the neck is also 0.0. A feature value of a keypoint A1 of a head higher than the neck is -0.2. A feature value of a keypoint A51 of a right hand and a keypoint A52 of a left hand lower than the neck is 0.4, and a feature value of the keypoint A81 of the right foot and the keypoint A82 of the left foot is 0.9. When the person raises the left hand from this state, the left hand is higher than the reference point as in Fig. 37, and thus a feature value of the keypoint A52 of the left hand is -0.4. Meanwhile, since normalization is performed by using only a coordinate of the Y axis, as in Fig. 38, a feature value does not change as compared to Fig. 36 even when a width of the skeleton structure changes. In other words, a feature value (normalization value) according to the present example embodiment indicates a feature of a skeleton structure (keypoint) in the height direction (Y direction), and is not affected by a change of the skeleton structure in the horizontal direction (X direction).

As described above, in the present example embodiment, a skeleton structure of a person is detected from a two-dimensional image, and each keypoint of the skeleton structure is normalized by using a height pixel number (upright height on a two-dimensional image space) acquired from the detected skeleton structure. Robustness when classification, a search, and the like are performed can be improved by using the normalized feature value. In other words, since a feature value according to the present example embodiment is not affected by a change of a person in the horizontal direction as described above, robustness with respect to a change in orientation of the person and a body shape of the person is great.

Furthermore, the present example embodiment can be achieved by detecting a skeleton structure of a person by using a skeleton estimation technique such as OpenPose, and thus learning data that learn a pose and the like of a person do not need to be prepared. Further, classification and a search of a pose and the like of a person can be achieved by normalizing a keypoint of a skeleton structure and storing the keypoint in advance in a database, and thus classification and a search can also be performed on an unknown pose. Further, a clear and simple feature value can be acquired by normalizing a keypoint of a skeleton structure, and thus persuasion of a user for a processing result is high unlike a black box algorithm as in machine learning.

While the example embodiments of the present invention have been described with reference to the drawings, the example embodiments are only exemplification of the present invention, and various configurations other than the above-described example embodiments can also be employed.

Further, the plurality of steps (pieces of processing) are described in order in the plurality of flowcharts used in the above-described description, but an execution order of steps performed in each of the example embodiments is not limited to the described order. In each of the example embodiments, an order of illustrated steps may be changed within an extent that there is no harm in context. Further, each of the example embodiments described above can be combined within an extent that a content is not inconsistent.

A part or the whole of the above-described example embodiments may also be described as in supplementary notes below, which is not limited thereto.

     1. An image processing apparatus including:

         an image acquisition means for acquiring an image;
         a selection means for selecting at least one person included in the image, based on a user input;
         a skeleton structure detection means for detecting a two-dimensional skeleton structure of a person included in the image;
         a feature value computation means for computing a feature value of the detected two-dimensional skeleton structure; and

         a search means for searching, from analysis target images, for the analysis target image including a person in a state similar to a state of the selected person, based on a degree of similarity to a feature value of the two-dimensional skeleton structure.

2. The image processing apparatus according to supplementary note 1, wherein
the selection means

         receives a user input that specifies at least a partial region in the image, and
         selects a person detected in the specified partial region.

3. The image processing apparatus according to supplementary note 1, wherein
the selection means

         displays, on the image, a processed image in which a person detected in the image is displayed as a selectable person in an identifiable manner, and
         receives a user input that selects at least one person from the selectable person.

4. The image processing apparatus according to supplementary note 3, wherein
the selection means displays the processed image in which a person whose detection result of the two-dimensional skeleton structure satisfies a predetermined condition is displayed as the selectable person in an identifiable manner.

5. The image processing apparatus according to supplementary note 4, wherein

         the skeleton structure detection means extracts a plurality of keypoints of a body in processing of detecting the two-dimensional skeleton structure, and
         a person who satisfies the predetermined condition is

         a person having a number of the extracted keypoints equal to or more than a reference value, or
         a person in which an evaluation value computed based on at least one of a number of the extracted keypoints and reliability of each of the extracted keypoints is equal to or more than a reference value.

6. The image processing apparatus according to any of supplementary notes 1 to 5, wherein

         the selection means selects a part of a body of the selected person, based on a user input that specifies at least a partial region in the image, and

the search means searches for the analysis target image including a person in a state similar to a state of the selected person by setting a weight of the selected part of the body to be greater than that of another part.

7. The image processing apparatus according to any of supplementary notes 1 to 6, wherein the selection means

determines a number of persons included in the image being acquired by the image acquisition means,

selects, when a determined number of persons is plural, at least one person from a plurality of persons included in the image, based on a user input, and

selects, when a determined number of persons is one, the one person.

8. An image processing method including, by a computer:

acquiring an image;

selecting at least one person included in the image, based on a user input;

detecting a two-dimensional skeleton structure of a person included in the image;

computing a feature value of the detected two-dimensional skeleton structure; and

searching, from analysis target images, for the analysis target image including a person in a state similar to a state of the selected person, based on a degree of similarity to a feature value of the two-dimensional skeleton structure.

9. A program causing a computer to function as:

an image acquisition means for acquiring an image;

a selection means for selecting at least one person included in the image, based on a user input;

a skeleton structure detection means for detecting a two-dimensional skeleton structure of a person included in the image;

a feature value computation means for computing a feature value of the detected two-dimensional skeleton structure; and

a search means for searching, from analysis target images, for the analysis target image including a person in a state similar to a state of the selected person, based on a degree of similarity to a feature value of the two-dimensional skeleton structure.

[Reference signs List]

| | |
|---|---|
| 1 | Image processing system |
| 10 | Image processing apparatus |
| 11 | Skeleton detection unit |
| 12 | Feature value computation unit |
| 13 | Recognition unit |
| 100 | Image processing apparatus |
| 101 | Image acquisition unit |
| 102 | Skeleton structure detection unit |
| 103 | Feature value computation unit |
| 104 | Classification unit |
| 105 | Search unit |
| 106 | Input unit |
| 107 | Display unit |
| 108 | Height computation unit |
| 109 | Selection unit |
| 110 | Database |
| 200 | Camera |
| 300, 301 | Human model |
| 401 | Two-dimensional skeleton structure |
| 402 | Three-dimensional human model |

**Claims**

1. An image processing apparatus comprising:

image acquisition means for acquiring an image;

selection means for selecting at least one person included in the image, based on a user input;

skeleton structure detection means for detecting a two-dimensional skeleton structure of a person included in the image;

feature value computation means for computing a feature value of the detected two-dimensional skeleton structure; and

search means for searching, from analysis target images, for the analysis target image including a person in a state similar to a state of the selected person, based on a degree of similarity to a feature value of the two-dimensional skeleton structure.

2. The image processing apparatus according to claim 1, wherein the selection means

receives a user input that specifies at least a partial region in the image, and

selects a person detected in the specified partial region.

3. The image processing apparatus according to claim 1, wherein the selection means

displays, on the image, a processed image in which a person detected in the image is displayed as a selectable person in an identifiable manner, and

receives a user input that selects at least one person from the selectable person.

4. The image processing apparatus according to claim 3, wherein

the selection means displays the processed image in which a person whose detection result of the two-dimensional skeleton structure satisfies a predetermined condition is displayed as the selectable person in an identifiable manner.

5. The image processing apparatus according to claim 4, wherein

the skeleton structure detection means extracts a plurality of keypoints of a body in processing of detecting the two-dimensional skeleton structure, and

a person who satisfies the predetermined condition is

a person having a number of the extracted keypoints equal to or more than a reference value, or

a person in which an evaluation value computed based on at least one of a number of the extracted keypoints and reliability of each of the extracted keypoints is equal to or more than a reference value.

6. The image processing apparatus according to any one of claims 1 to 5, wherein

the selection means selects a part of a body of the selected person, based on a user input that specifies at least a partial region in the image, and

the search means searches for the analysis target image including a person in a state similar to a state of the selected person by setting a weight of the selected part of the body to be greater than that of another part.

7. The image processing apparatus according to any one of claims 1 to 6, wherein the selection means

determines a number of persons included in the image being acquired by the image acquisition means,

selects, when a determined number of persons is plural, at least one person from a plurality of persons included in the image, based on a user input, and

selects, when a determined number of persons is one, the one person.

8. An image processing method comprising, by a computer:

acquiring an image;
selecting at least one person included in the image, based on a user input;
detecting a two-dimensional skeleton structure of a person included in the image;
computing a feature value of the detected two-dimensional skeleton structure; and
searching, from analysis target images, for the analysis target image including a person in a state similar to a state of the selected person, based on a degree of similarity to a feature value of the two-dimensional skeleton structure.

9. A program causing a computer to function as:

image acquisition means for acquiring an image;
selection means for selecting at least one person included in the image, based on a user input;
skeleton structure detection means for detecting a two-dimensional skeleton structure of a person included in the image;
feature value computation means for computing a feature value of the detected two-dimensional skeleton structure; and
search means for searching, from analysis target images, for the analysis target image including a person in a state similar to a state of the selected person, based on a degree of similarity to a feature value of the two-dimensional skeleton structure.

FIG. 1

IMAGE PROCESSING APPARATUS — 10

SKELETON DETECTION UNIT — 11

FEATURE VALUE COMPUTATION UNIT — 12

RECOGNITION UNIT — 13

FIG. 2

IMAGE PROCESSING APPARATUS — 100

101 — IMAGE ACQUISITION UNIT

102 — SKELETON STRUCTURE DETECTION UNIT

103 — FEATURE VALUE COMPUTATION UNIT

109 — SELECTION UNIT

104 — CLASSIFICATION UNIT

105 — SEARCH UNIT

106 — INPUT UNIT

107 — DISPLAY UNIT

200 — CAMERA

110 — DB

FIG. 3

```
                    ┌──────────┐
                    │  START   │
                    └────┬─────┘
                         │
                         ▼
              ┌─────────────────────┐        S101
              │   ACQUIRE IMAGE     │
              └──────────┬──────────┘
DATA                     │
ACCUMULATION             ▼
PROCESSING    ┌─────────────────────┐        S102
              │  DETECT SKELETON    │
              │     STRUCTURE       │
              └──────────┬──────────┘
                         │
                         ▼
              ┌─────────────────────┐        S103
              │ COMPUTE FEATURE VALUE│
              └──────────┬──────────┘
                         │
                         ▼
CLASSIFICATION ┌─┬───────────────┬─┐        S104
PROCESSING     │ │   CLASSIFY    │ │
               └─┴───────┬───────┴─┘
                         │
                         ▼
SEARCH         ┌─┬───────────────┬─┐        S105
PROCESSING     │ │    SEARCH     │ │
               └─┴───────┬───────┴─┘
                         │
                         ▼
                    ┌──────────┐
                    │   END    │
                    └──────────┘
```

26

FIG. 4

```
        ┌─────────────┐
        │    START    │
        └──────┬──────┘
               ↓
   ┌───────────────────────┐
   │  COMPUTE DEGREE OF     │ ～～ S111
   │     SIMILARITY        │
   └───────────┬───────────┘
               ↓
   ┌───────────────────────┐
   │      CLASSIFY          │ ～～ S112
   └───────────┬───────────┘
               ↓
   ┌───────────────────────┐
   │ DISPLAY CLASSIFICATION │ ～～ S113
   │       RESULT           │
   └───────────┬───────────┘
               ↓
        ┌─────────────┐
        │     END     │
        └─────────────┘
```

FIG. 5

FIG. 6

FIG. 7

300

FIG. 8

FIG. 9

FIG. 10

FIG. 11

FIG. 12

FIG. 13

501

502

503

EP 4 177 770 A1

FIG. 14

FIG. 15

521

A1  A2  A31  A32  A41  A42  A51  A52

522

A1  A2  A31  A32  A41  A42  A51  A52

FIG. 16

FIG. 17

Query   Output

Q10   Q11

Q20   Q21

Q30   Q31

W2

EP 4 177 770 A1

FIG. 18

IMAGE PROCESSING APPARATUS 100

- 101 IMAGE ACQUISITION UNIT
- 102 SKELETON STRUCTURE DETECTION UNIT
- 103 FEATURE VALUE COMPUTATION UNIT
- 108 HEIGHT COMPUTATION UNIT
- 104 CLASSIFICATION UNIT
- 105 SEARCH UNIT
- 106 INPUT UNIT
- 107 DISPLAY UNIT
- 109 SELECTION UNIT

200 CAMERA

110 DB

EP 4 177 770 A1

FIG. 19

```
              ┌─────────────┐
              │    START    │
              └──────┬──────┘
                     │
          ┌──────────▼──────────┐        S101
          │    ACQUIRE IMAGE    │
          └──────────┬──────────┘
                     │
          ┌──────────▼──────────┐        S102
          │  DETECT SKELETON    │
          │     STRUCTURE       │
          └──────────┬──────────┘
                     │
          ┌──────────▼──────────┐        S201
          │  COMPUTE HEIGHT     │
          │   PIXEL NUMBER      │
          └──────────┬──────────┘
                     │
          ┌──────────▼──────────┐        S202
          │     NORMALIZE       │
          └──────────┬──────────┘
                     │
          ┌──────────▼──────────┐        S104
          │     CLASSIFY        │
          └──────────┬──────────┘
                     │
          ┌──────────▼──────────┐        S105
          │      SEARCH         │
          └──────────┬──────────┘
                     │
              ┌──────▼──────┐
              │     END     │
              └─────────────┘
```

DATA ACCUMULATION PROCESSING

CLASSIFICATION PROCESSING

SEARCH PROCESSING

FIG. 20

```
        ┌─────────────┐
        │    START    │
        └─────────────┘
               │
               ▼
   ┌───────────────────────┐
   │   ACQUIRE LENGTH      │ ~~~ S211
   │   OF EACH BONE        │
   └───────────────────────┘
               │
               ▼
   ┌───────────────────────┐
   │   ADD UP LENGTH       │ ~~~ S212
   │   OF EACH BONE        │
   └───────────────────────┘
               │
               ▼
        ┌─────────────┐
        │     END     │
        └─────────────┘
```

FIG. 21

START

ACQUIRE LENGTH OF EACH BONE — S221

COMPUTE HEIGHT PIXEL NUMBER
FROM EACH BONE, BASED ON
HUMAN MODEL — S222

COMPUTE OPTIMUM VALUE
OF HEIGHT PIXEL NUMBER — S223

END

## FIG. 22

```
          ┌─────────────┐
          │    START    │
          └─────────────┘
                 │
                 ▼
   ┌──────────────────────────┐           S231
   │     COMPUTE CAMERA       │
   │       PARAMETER          │
   └──────────────────────────┘
                 │
                 ▼
   ┌──────────────────────────┐           S232
   │ ADJUST ARRANGEMENT AND   │
   │  HEIGHT OF THREE-        │
   │  DIMENSIONAL HUMAN       │
   │        MODEL             │
   └──────────────────────────┘
                 │
                 ▼
   ┌──────────────────────────┐           S233
   │  FIT THREE-DIMENSIONAL   │
   │  HUMAN MODEL TO TWO-     │
   │  DIMENSIONAL SKELETON    │
   │      STRUCTURE           │
   └──────────────────────────┘
                 │
                 ▼
   ┌──────────────────────────┐           S234
   │ COMPUTE HEIGHT PIXEL     │
   │ NUMBER OF THREE-         │
   │ DIMENSIONAL HUMAN MODEL  │
   └──────────────────────────┘
                 │
                 ▼
          ┌─────────────┐
          │     END     │
          └─────────────┘
```

FIG. 23

```
        ┌─────────────┐
        │    START    │
        └──────┬──────┘
               │
    ┌──────────▼──────────────┐        S241
    │ COMPUTE KEYPOINT HEIGHT │
    └──────────┬──────────────┘
               │
    ┌──────────▼──────────────┐        S242
    │ DETERMINE REFERENCE POINT│
    └──────────┬──────────────┘
               │
    ┌──────────▼──────────────┐        S243
    │  NORMALIZE KEYPOINT HEIGHT│
    │  BY HEIGHT PIXEL NUMBER   │
    └──────────┬──────────────┘
               │
        ┌──────▼──────┐
        │     END     │
        └─────────────┘
```

FIG. 24

300

FIG. 25

B1 (L1)

B51 (L21)

B52 (L22)

B62 (L32)

B61 (L31)

B71 (L41)

B72 (L42)

FIG. 26

B1 (L1)

B52 (L22)

B51 (L21)

B61 (L31)

B62 (L32)

B72 (L42)

B71 (L41)

FIG. 27

B1 (L1)

B52 (L22)

B62 (L32)

B72 (L42)

B51 (L21)

B61 (L31)

B71 (L41)

FIG. 28

301

FIG. 29

## FIG. 30

FIG. 31

401

EP 4 177 770 A1

FIG. 32

402

x

y

Z

FIG. 33

401

402

ARRANGE

EP 4 177 770 A1

FIG. 34

FIG. 35

FIG. 36

FIG. 37

FIG. 38

# FIG. 39

QUERY-SPECIFIC IMAGE

| IMAGE IDENTIFICATION INFORMATION | KEYWORD |
|---|---|
| C0001 | SIT-DOWN, KNEELING WITH BUTTOCKS ON HEELS |
| C0002 | SIT-DOWN, SITTING WITH LEGS CROSSED |
| . . . | . . . |

# FIG. 40

ANALYSIS TARGET IMAGE

| IMAGE IDENTIFICATION INFORMATION | KEYWORD | . . . |
|---|---|---|
| 000001 | SIT-DOWN, KNEELING WITH BUTTOCKS ON HEELS | . . . |
| 000002 | . . . | . . . |
| 000003 | . . . | . . . |
| 000004 | . . . | . . . |
| .<br>.<br>. | .<br>.<br>. | .<br>.<br>. |

FIG. 41

```
                              ┌─────────────────┐
                              │  INPUT/OUTPUT   │ ⟩ 3A
                              │   INTERFACE     │
                              └────────┬────────┘          5A
                                       │                   ⟩
    ───────────────┬─────────────────┬─────────────────┬──────────
                   │                 │                 │
          ┌────────┴───────┐  ┌──────┴──────┐  ┌───────┴────────┐
          │   PROCESSOR    │  │   MEMORY    │  │  PERIPHERAL    │
          │                │  │             │  │   CIRCUIT      │
          └────────────────┘  └─────────────┘  └────────────────┘
                  ⟩                  ⟩                  ⟩
                 1A                 2A                 4A
```

# FIG. 42

QUERY IMAGE SPECIFICATION

| SIT-DOWN | SEARCH |

SEARCH RESULT

ENTER

NEXT ▶

☆ SELECT IMAGE TO BE QUERY IMAGE FROM
AMONG SEARCH RESULTS, AND PRESS
ENTER BUTTON.

RETURN

EP 4 177 770 A1

FIG. 43

FIG. 44

FIG. 45

FIG. 46

FIG. 47

FIG. 48

FIG. 49

```
                    ┌─────────────┐
                    │    Start    │
                    └──────┬──────┘
                           │
        ┌──────────────────┴──────────────────┐
        │        ACQUIRE QUERY IMAGE           │─── S301
        └──────────────────┬──────────────────┘
                           │
        ┌──────────────────┴──────────────────┐
        │    SELECT AT LEAST ONE PERSON        │
        │    INCLUDED IN IMAGE, BASED ON       │─── S302
        │           USER INPUT                 │
        └──────────────────┬──────────────────┘
                           │
        ┌──────────────────┴──────────────────┐
        │     COMPUTE FEATURE VALUE OF         │
        │    TWO-DIMENSIONAL SKELETON          │─── S303
        │  STRUCTURE OF SELECTED PERSON        │
        └──────────────────┬──────────────────┘
                           │
                    ┌──────┴──────┐
                    │     End     │
                    └─────────────┘
```

FIG. 50

```
        ┌─────────┐
        │  Start  │
        └─────────┘
             │
  ┌──────────────────────┐
  │  ACQUIRE QUERY IMAGE  │── S311
  └──────────────────────┘
             │
  ┌──────────────────────┐
  │    DETECT PERSON     │── S312
  └──────────────────────┘
             │
         ╱─────────╲          S313
        ╱  PLURAL?  ╲──── No
        ╲           ╱
         ╲─────────╱
             │ Yes
```

|  | |
|---|---|
| S314 | S315 |
| SELECT AT LEAST ONE PERSON INCLUDED IN IMAGE, BASED ON USER INPUT | SELECT ONE PERSON INCLUDED IN IMAGE |

COMPUTE FEATURE VALUE OF TWO-DIMENSIONAL SKELETON STRUCTURE OF SELECTED PERSON — S316

End

FIG. 51

FIG. 52

SIMILAR IMAGE
IS SEARCHED.
SELECT IMAGE
TO BE QUERY.

## INTERNATIONAL SEARCH REPORT

| International application No. |
|---|
| PCT/JP2020/025793 |

**A. CLASSIFICATION OF SUBJECT MATTER**

Int. Cl. G06F16/54(2019.01)i, G06F16/55(2019.01)i
FI: G06F16/55, G06F16/54

According to International Patent Classification (IPC) or to both national classification and IPC

**B. FIELDS SEARCHED**

Minimum documentation searched (classification system followed by classification symbols)
Int. Cl. G06F16/54, G06F16/55

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-91138 A (HITACHI, LTD.) 13 June 2019, paragraphs [0010]-[0081], fig. 1-12 | 1-9 |
| Y | JP 2015-61577 A (TOSHIBA CORP.) 02 April 2015, paragraphs [0105]-[0109], fig. 15 | 1-9 |
| A | JP 2014-522035 A (SAMSUNG ELECTRONICS CO., LTD.) 28 August 2014, entire text, all drawings | 1-9 |
| A | JP 2011-118790 A (NIPPON TELEGRAPH AND TELEPHONE CORP.) 16 June 2011, entire text, all drawings | 1-9 |

☐ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24.08.2020 | 01.09.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2020/025793

| Patent Documents referred to in the Report | Publication Date | Patent Family | Publication Date |
|---|---|---|---|
| JP 2019-91138 A | 13.06.2019 | US 2019/0147292 A1 paragraphs [0029]-[0100], fig. 1-12 EP 3483741 A1 CN 109947975 A | |
| JP 2015-61577 A | 02.04.2015 | US 2015/0310629 A1 paragraphs [0158]-[0162], fig. 15 | |
| JP 2014-522035 A | 28.08.2014 | US 2013/0028517 A1 WO 2013/015528 A1 EP 2737418 A1 KR 10-2013-0013122 A CN 103718175 A | |
| JP 2011-118790 A | 16.06.2011 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014522035 W
- JP 2006260405 A
- JP 2020013290 A
- JP 2019091138 A

**Non-patent literature cited in the description**

- **ZHE CAO ; TOMAS SIMON ; SHIH-EN WEI ; YAS-ER SHEIKH.** Realtime Multi-Person 2D Pose Estimation using Part Affinity Fields. *The IEEE Conference on Computer Vision and Pattern Recognition (CVPR),* 2017, 7291-7299